# EUROPEAN PATENT SPECIFICATION

(11) **EP 4 086 983 B1**
(45) Date of publication and mention of the grant of the patent: **19.06.2024**
(21) Application number: 22171582.4
(22) Date of filing: 04.05.2022
(51) Int. Cl.: H01M 4/04, H01M 4/133, H01M 4/134, H01M 4/36, H01M 4/38, H01M 4/583, H01M 4/587, H01M 10/0525, H01M 10/0562, H01M 10/0585, H01M 50/143, H01M 50/383, H01M 4/525, H01M 4/02

(54) **ALL SOLID SECONDARY BATTERY AND ALL SOLID SECONDARY BATTERY STRUCTURE**
MASSIVE SEKUNDÄRBATTERIE UND MASSIVE SEKUNDÄRBATTERIESTRUKTUR
BATTERIE SECONDAIRE ENTIÈREMENT SOLIDE ET STRUCTURE DE BATTERIE SECONDAIRE ENTIÈREMENT SOLIDE

(30) Priority: 04.05.2021 KR 20210058111
(43) Date of publication of application: 09.11.2022
(73) Proprietor: Samsung SDI Co., Ltd., Yongin-si, Gyeonggi-do 17084 (KR)
(72) Inventor: Lee, Minsuk, 17084 Yongin-si, Gyeonggi-do (KR); Kim, Hongjeong, 17084 Yongin-si, Gyeonggi-do (KR); Yoon, Jaegu, 17084 Yongin-si, Gyeonggi-do (KR); Ryu, Younggyoon, 17084 Yongin-si, Gyeonggi-do (KR)
(74) Representative: Gulde & Partner

(56) References cited:
- WO-A1-2014/171309
- WO-A1-2019/103008
- US-A1- 2017 207 482

## Description

### BACKGROUND

### 1. Field

One or more embodiments of the present disclosure relate to an all-solid secondary battery and an all-solid secondary battery structure including the same.

### 2. Description of the Related Art

In recent years, in response to industrial needs, batteries having a high energy density and safety have been actively developed (and desired). For example, lithium-ion batteries are being commercialized for utilization in automobiles in addition to information-related devices and communication devices. In the automotive field, safety is especially important because malfunctions and/or accidents can be life threatening.

Because the current commercially available lithium-ion batteries have utilized a liquid electrolyte including flammable organic solvents, there is a possibility of overheating or a fire when a short circuit occurs. Therefore, an all-solid-state battery utilizing a solid electrolyte instead of a liquid electrolyte has been proposed (sought). For example, WO 2019/103008 A relates to a method for producing an electrode body for all-solid-state batteries which is capable of inhibiting the formation of cracks in a solid electrolyte layer, even if the electrode body is pressed under high pressure. US 2017/0207482 A1 describes a method for manufacturing an all-solid-state battery to inhibit the cracking in roll press, by carrying out a roll press on a stack including a first current collector, before stacking the second current collector thereon, and after the roll press, arranging the second current collector. WO 2014/1713T9 A1 relates to all-solid-state cell comprising a solid electrolyte layer, a positive electrode-side collector, a positive electrode layer, a negative electrode-side collector, and a negative electrode layer.

An all-solid-state battery does not utilize a combustible organic dispersion medium, and thus may significantly reduce the likelihood of a fire or an explosion even if a short circuit occurs. Therefore, such an all-solid-state battery may greatly increase safety as compared to a lithium-ion battery utilizing a liquid electrolyte.

### SUMMARY

The invention is directed to an all-solid secondary battery as disclosed in claim 1. The scope of protection is defined by the appended claims. Aspects of one or more embodiments of the present disclosure are directed to an all-solid secondary battery of a new structure.

Additional aspects of embodiments of the present disclosure will be set forth in part in the description which follows and, in part, will be apparent from the disclosure, or may be learned by practice of the presented embodiments of the disclosure.

According to an embodiment,
an all-solid secondary battery including: a cathode layer; an anode layer; and a solid electrolyte layer between the cathode layer and the anode layer, is provided, wherein
the cathode layer includes a positive electrode current collector and a positive active material layer on one side or both (e.g., top and bottom) sides of the positive electrode current collector,
the anode layer includes a negative electrode current collector and a first negative active material layer on the negative electrode current collector,
and a flame retardant inactive member is on one side of the cathode layer, wherein the flame retardant inactive member (40) contains a matrix and a filler and the matrix contains a fibrous substrate and a fibrous reinforcing agent.

According to an embodiment,
an all-solid secondary battery structure including: at least one all-solid secondary battery according to the present invention; and
a conductive flame retardant inactive member on one side or both (e.g., top and bottom) sides of the all-solid secondary battery, is provided.

### BRIEF DESCRIPTION OF THE DRAWINGS

The above and other aspects and features of certain embodiments of the disclosure will be more apparent from the following description taken in conjunction with the accompanying drawings, in which:
FIG. 1 is a cross-sectional view of an all-solid secondary battery according to an embodiment;
FIG. 2 is a cross-sectional view of an all-solid secondary battery according to an embodiment;
FIG. 3 is a cross-sectional view of a bi-cell all-solid secondary battery according to an embodiment;
FIG. 4 is a cross-sectional view of a cathode layer in an all-solid secondary battery according to an embodiment;
FIG. 5 is a schematic diagram partially showing the interior of an all-solid secondary battery according to an embodiment;
FIG. 6 is a cross-sectional view of an all-solid secondary battery structure according to an embodiment;
FIG. 7 is a cross-sectional view of an all-solid secondary battery structure according to an embodiment;
FIG. 8 is a cross-sectional view of an all-solid secondary battery structure according to an embodiment; and
FIG. 9 is a cross-sectional view of an all-solid secondary battery structure according to an embodiment.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of embodiments of the present disclosure. As utilized herein, the term "and/or" includes any and all combinations of one or more of the associated listed items. Expressions such as "at least one of," when preceding a list of elements, modify the entire list of elements and do not modify the individual elements of the list.

Because an electrolyte of an all-solid secondary battery is a solid, when the contact between a cathode layer and a solid electrolyte layer and the contact between an anode layer and the solid electrolyte layer are not maintained sufficiently, the resistance in the battery may increase and make it difficult to demonstrate excellent or suitable battery properties.

In order to increase the contact between the anode layer and the solid electrolyte, a process of manufacturing the all-solid secondary battery involves a pressing procedure or task (e.g., a pressing step). In the pressing step, there may be a pressure difference in different planar regions of the stack including a cathode layer, an anode layer and a solid electrolyte layer, for example in partially unstacked parts (e.g., parts where one or more elements are not present along a thickness direction of the stack), micro-defects in one or more elements, for example, the solid electrolyte layer, may occur due to the pressure difference. During charge/discharge processes of an all-solid secondary battery, cracks may be generated from these defects and may grow in the solid electrolyte layer. As a lithium dendrite grows through these cracks, a short circuit may occur between the cathode layer and the anode layer.

The all-solid secondary battery according to the present disclosure has a structure that prevents (or reduces) a short circuit occurrence in a charge/discharge process, and cycle characteristics and safety are improved.

The present disclosure described herein may be modified in one or more suitable ways and may have many examples, and certain examples are illustrated in the drawings, and will be described in more detail. However, this present disclosure is not intended to be limited to certain embodiments, and it should be understood that the scope of protection is defined by the appended claims.

The terms utilized herein were utilized to explain certain examples, and not to limit the scope of the present disclosure. Singular expressions include plural expressions unless the meanings are clearly different in the context. The expression of "include" or "have" utilized herein indicates the existence of a characteristic, a number, a phase, a movement, an element, a component, a material or a combination thereof, and it should not be construed to exclude in advance the existence or possibility of existence of at least one of other characteristics, numbers, movements, elements, components, materials or combinations of thereof. As used herein, "/" can be interpreted to refer to "and" or "or" depending on the context.

In the drawing, a thickness may be enlarged or reduced to clearly represent one or more suitable layers and regions. The same reference numerals may be attached to similar portions throughout the disclosure. As used herein throughout the disclosure, when a layer, a film, a region, or a plate is described to be "on" or "above" something else, it not only includes the embodiment that it is right above something else but also the case when other portions are present in-between. Terms like "first", "second", and/or the like may be used to describe one or more suitable components, but the components are not limited by the terms. The terms are used merely for the purpose of distinguishing one component from other components. In the present disclosure and the drawings, a component having substantially the same functional configuration is referred to the same reference numeral, and redundant description may not be provided.

Hereinafter, an all-solid secondary battery according to embodiments will be described in more detail.

### All-Solid secondary battery

The all-solid secondary battery according to the present invention includes: a cathode layer; an anode layer; and a solid electrolyte layer between the cathode layer and the anode layer, wherein the cathode layer includes a positive electrode current collector and a positive active material layer on one side or both (e.g., top and bottom) sides of the positive electrode current collector, the anode layer includes a negative electrode current collector and a first negative active material on the negative electrode current collector, and a flame retardant inactive member on one side of the cathode layer, wherein the flame retardant inactive member contains a matrix and a filler and the matrix contains a fibrous substrate and a fibrous reinforcing agent. As the flame retardant inactive member is on one side of the cathode layer, the occurrence of the solid electrolyte cracks during a pressing step and/or a charge/discharge process may be suppressed or reduced. Therefore, the cracking of the solid electrolyte layer during a charge/discharge process is suppressed or reduced, and thereby a short circuit occurrence of the all-solid secondary battery is suppressed or reduced. Also, as the internal resistance of the all-solid secondary battery is decreased, the discharge capacity at a high-rate discharge is increase. As a result, the cycle characteristics of the all-solid secondary battery is improved. In some embodiments, as the flame retardant inactive member may provide a flame retardancy, the possibility of a thermal runaway and ignition of the all-solid secondary battery may be reduced, and as a result, the safety of the all-solid secondary battery may be further improved. Furthermore, as the flame retardant inactive member may absorb the residual moisture within the all-solid secondary battery, a degradation of the all-solid secondary battery may be prevented or reduced to improve lifespan properties of the all-solid secondary battery.

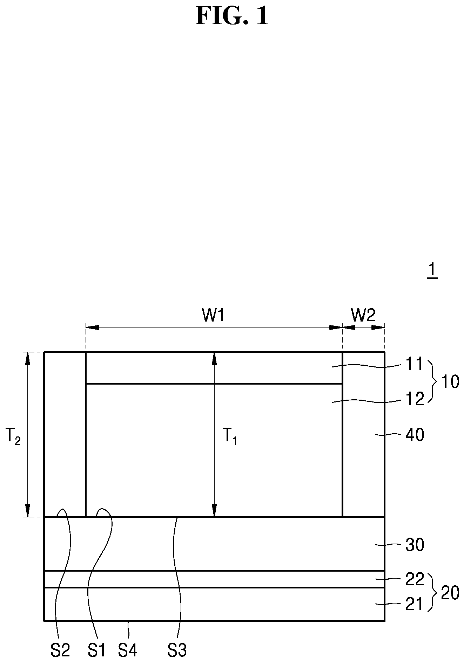

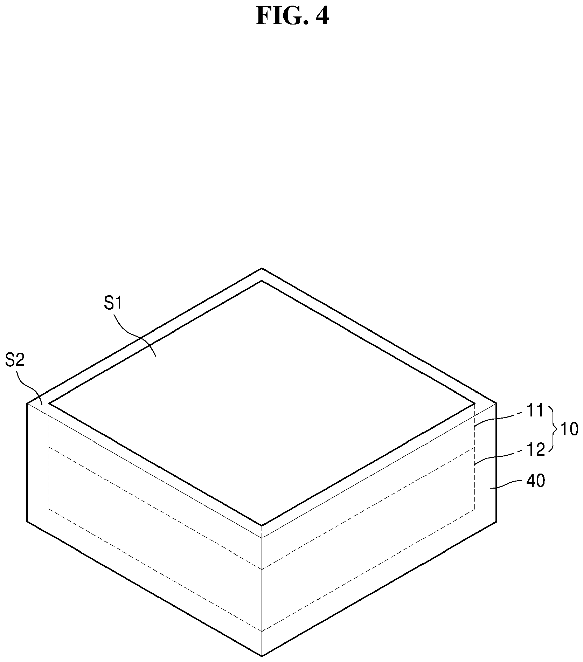

Referring to FIGS. 1 to 6, an all-solid secondary battery 1 includes: a cathode layer 10; an anode layer 20; and a solid electrolyte layer 30 between the cathode layer 10 and the anode layer 20, wherein the cathode layer 10 includes a positive electrode current collector 11 and a positive active material layer 12 on one side or both (e.g., top and bottom) sides of the positive electrode current collector, and the anode layer 20 includes a negative electrode current collector 21 and a first negative active material layer 22 on the negative electrode current collector 21, and a flame retardant inactive member 40 on one side of the cathode layer 10, wherein the flame retardant inactive member (40) contains a matrix and a filler and the matrix contains a fibrous substrate and a fibrous reinforcing agent.

### Cathode Layer

### Cathode Layer: Flame Retardant Inactive Member

Referring to FIGS. 1 to 2, the cathode layer 10 includes a positive electrode current collector 11 and a positive active material layer 12 on one side of the positive electrode current collector. A flame retardant inactive member 40 is on one side of the cathode layer 10. The inactive member 40 may be on one side of the positive active material layer 12 and the positive electrode current collector 11. In some embodiments, the inactive member 40 may be on one side of the positive active material layer 12 and on one side of the positive electrode current collector 11 facing the solid electrolyte layer 30.

By including the flame retardant inactive member 40, an occurrence of cracks in the solid electrolyte layer 30 during a manufacturing process of the all-solid secondary battery and/or a charge/discharge process of the all-solid secondary battery may be prevented or reduced, and as a result, the cycle characteristics of the all-solid secondary battery may be improved. In an all-solid secondary battery 1 not including the flame retardant inactive member 40, as uneven pressure is applied on the solid electrolyte layer 30 contacting the cathode layer 10, cracks may occur during the manufacturing process of the all-solid secondary battery 1 and/or a charge/discharge process of the all-solid secondary battery 1, and as a result, the likelihood of a short circuit occurrence may increase.

A thickness (T2) of the flame retardant inactive member 40 may be equal to or less than a thickness (T1) of the cathode layer 10. Because a thickness (T2) of the flame retardant inactive member 40 may be equal to or less than a thickness (T1) of the cathode layer 10, the cathode layer 10 and the solid electrolyte layer 30 may be sufficiently adhered (to one another), and thereby the interfacial resistance between the cathode layer 10 and the solid electrolyte layer 30 may be reduced. In some embodiments, as the solid electrolyte layer 30 may be sufficiently sintered during the manufacturing process of the all-solid secondary battery 1, the internal resistance of the solid electrolyte layer 30 or the all-solid secondary battery 1 including the same may be reduced.

Referring to FIG. 1, a thickness (T2) of the flame retardant inactive member 40 may be substantially the same as, for example, a thickness (T1) of the cathode layer 10. As a thickness (T2) of the flame retardant inactive member 40 may be substantially identical to a thickness (T1) of the cathode layer 10, the uniformity of the pressure applied to the solid electrolyte layer 30 at the time of the manufacture of an all-solid secondary battery 1 and/or a charge/discharge process may be improved. Therefore, cracks of the solid electrolyte layer 30 occurring at the time of a manufacture and/or a charge/discharge process may be suppressed or reduced, and thereby a short circuit occurrence in the all-solid secondary battery may be suppressed or reduced.

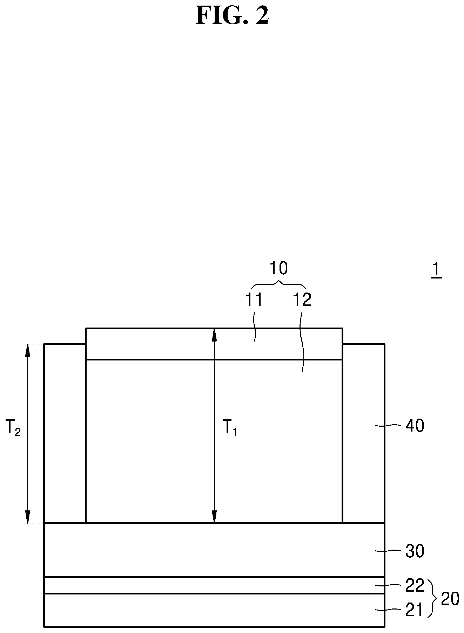

Referring to FIG. 2, a thickness (T2) of the flame retardant inactive member 40 may be smaller than, for example, a thickness (T1) of the cathode layer 10. A thickness (T2) of the flame retardant inactive member 40 may be smaller than, for example, a thickness (T1) of the cathode layer 10, and bigger than a thickness of the positive active material layer 12.

A thickness (T2) of the flame retardant inactive member 40 may be less than a thickness of, for example, the positive active material layer 12.

A thickness (T2) of the flame retardant inactive member 40 may be, for example, 50 % to 120 %, 60 % to 120 %, 70 % to 120 %, 80 % to 120 %, 80 % to 110 %, 80 % to 100 %, 90 % to 100 %, or 95 % to 100% of a thickness (T1) of the cathode layer 10. A thickness (T2) of the flame retardant inactive member 40 may be, for example, 70 % to 100 %, 80 % to 100 %, 90 % to 100 %, or 95 % to 100 % of a thickness (T1) of the cathode layer 10. When a thickness (T2) of the flame retardant inactive member 40 is excessively thicker than a thickness (T1) of the cathode layer 10, a pressure may not be applied properly at the cathode layer 10 during a manufacturing process of an all-solid secondary battery 1, and the solid electrolyte layer 30 in contact with the cathode layer 10 may not be sufficiently pressed. Therefore, the interfacial resistance between the cathode layer 10 and the solid electrolyte layer 30 may be increased, and as a result, the cycle characteristics of the all-solid secondary battery may be deteriorated. For example, the solid electrolyte layer 30 in contact with the cathode layer 10 may not be sufficiently pressed. When a thickness (T2) of the flame retardant inactive member 40 is excessively thinner than a thickness (T1) of the cathode layer 10, a pressure may not be evenly applied at the solid electrolyte layer 30 in contact with the cathode layer 10 during a manufacturing process of an all-solid secondary battery 1. Therefore, cracks of the solid electrolyte layer 30 occurring during a manufacturing process and/or a charge/discharge process of the all-solid secondary battery 1 may be increased, and thereby a short circuit occurrence of the all-solid secondary battery may be increased or the cycle characteristics are deteriorated. For example, when a thickness (T2) of the inactive member 40 is excessively thin, the effect of the addition of the inactive member may be minimized or reduced.

The flame retardant inactive member 40 may be around (e.g., surround) the cathode layer 10 (e.g., view in a thickness direction or in a plan view) and contact (e.g., be directly on) the solid electrolyte layer 30. Because the flame retardant inactive member 40 may surround (e.g., lateral outer side surface) the cathode layer 10 and contact the solid electrolyte layer, the cracks of the solid electrolyte layer 30 that occur in the solid electrolyte layer 30 not contacting the cathode layer 20 during the pressing process by a pressure difference may be effectively suppressed or reduced. The flame retardant inactive member 40 may surround of the cathode layer 10 and may be separated from the anode layer 20, or for example, from the first negative active material layer 22. The flame retardant inactive member 40 surrounds the cathode layer 10, contacts the solid electrolyte layer 30, and is separated from the anode layer 20. Therefore, the possibility of a short circuit occurrence due to a physical contact of the cathode layer 10 and the first negative active material layer 22 or to an overcharge of lithium may be suppressed or reduced.

Referring to FIGS. 1 to 4, the flame retardant inactive member 40 may extend from a side of the cathode layer 10 to a distal end portion of the solid electrolyte layer 30. As the flame retardant inactive member 40 extends to the distal end portion of the solid electrolyte layer 30, the cracks at the distal end portion of the solid electrolyte layer 30 may be suppressed or reduced. The distal end portion of the solid electrolyte layer 30 may be an outermost portion contacting a side surface of the solid electrolyte layer 30. For example, the flame retardant inactive member 40 may extend to the outermost portion contacting a side of the solid electrolyte layer 30. The flame retardant inactive member 40 may be separated from the anode layer 20, or more for example, from the first negative active material layer 22. Therefore, the flame retardant inactive member 40 may extend to the distal end portion of the solid electrolyte layer 30, but does not contact the anode layer 20. The flame retardant inactive member 40 fills the space extending to the distal end portion of the solid electrolyte layer 30 from, for example, a side of the cathode layer 30.

Referring to FIGS. 1 and 2, a width (W2) of the flame retardant inactive member 40 extending from one side of the cathode layer 10 to the end of the solid electrolyte layer 30 is 1 % to 30 %, 1 % to 25%, 1 % to 20%, 1 % to 15%, 1 % to 10% or 1 % to 5% of a width (W1) of the cathode layer (10). When the width (W2) of the flame retardant inactive member 40 is excessively wide, an energy density of the all-solid secondary battery 1 may be reduced. When the width (W2) of the flame retardant inactive member 40 may be excessively narrow, the effect of disposing the flame retardant inactive member may be minimized or reduced.

An area (S1) of the cathode layer 10 is smaller than an area (S3) of the solid electrolyte layer 30 in contact with the cathode layer 10, and the flame retardant inactive member 40 is arranged to surround a side of the cathode layer 10, and compensates for a difference in area between the cathode layer 10 and the solid electrolyte layer 30. As an area (S2) of the flame retardant inactive member 40 (S2) compensates for a difference in area between the area (S1) of the cathode layer 10 and the area (S3) of the solid electrolyte layer 30, cracks of the solid electrolyte layer 30 generated by a pressure difference during the pressing process can be effectively suppressed or reduced. For example, in one embodiment, the sum of the area (S1) of the cathode layer 10 and the area (S2) of the inactive member 40 is the same the area (S3) of the solid electrolyte layer 30 (e.g., S1 + S2 = S3).

The area (S1) of the cathode layer 10 may be less than 100 %, 99 % or less, 98 % or less, 97 % or less, 96 % or less, 95 % or less, or 93 % or less of the area (S3) of the solid electrolyte layer 30. For example, the area (S1) of the cathode layer 10 may be 50 % to less than 100 %, 50 % to 99 %, 55 % to 98 %, 60 % to 97 %, 70 % to 96 %, 80 % to 95 %, or 85 % to 95 % of the area (S3) of the solid electrolyte layer 30.

When the area (S1) of the cathode layer 10 is equal to or bigger than the area (S3) of the solid electrolyte layer 30, a short circuit may occur because the cathode layer 10 may physically contact the first negative active material layer 22 or the possibility of a short circuit may increase due to an overcharge of lithium and/or the like. The area (S1) of the cathode layer 10 may be equal to, for example, the area of positive active material layer 12. The area (S1) of the cathode layer 10 may be equal to, for example, the area of the positive electrode current collector 11.

The area (S2) of the flame retardant inactive member 40 may be 50 % or less, 40 % or less, 30 % or less, 20 % or less or 10% or less of the area (S1) of the cathode layer 10. For example, the area (S2) of the flame retardant inactive member 40 may be 1 % to50 %, 5% to 40%, 5% to 30%, 5% to 20% or 5% to 15% of the area (S1) of the cathode layer 10.

The area (S1) of the cathode layer 10 may be smaller than an area (S4) of the negative electrode current collector 21. For example, the area (S1) of the cathode layer 10 may be less than 100 %, 99 % or less, 98 % or less, 97 % or less, 96 % or less, 95 % or less, or 93 % or less of the area (S4) of the negative electrode current collector 21. For example, the area (S1) of the cathode layer 10 may be 50 % to less than 100 %, 50 % to 99 %, 55 % to 98 %, 60 % to 97 %, 70 % to 96 %, 80 % to 95 %, or 85 % to 95 % of the area (S4) of the negative electrode current collector 21. The area (S4) of the negative electrode current collector 21 may be, for example, the same with the area of the anode layer 20. The area (S4) of the negative electrode current collector 21 may be, for example, the same with the area of the first negative active material 22.

In the present disclosure, "the same" area, length, width, thickness and/or form include all cases having "substantially the same" area, length, width, thickness and/or form except for cases wherein the area, length, width, thickness and/or form are intentionally different. "The same" area, length, width, and/or thickness include the embodiments wherein the unintentional difference of the area, length, width, and/or thickness of the subjects of comparison are, for example, less than 1 %, less than 0.5 %, or less than 0.1 %.

The flame retardant inactive member 40 may be, for example, a gasket. As the gasket is utilized as the inactive member 40, the cracks of the solid electrolyte layer 30 generated by a pressure difference during the pressing process may be effectively suppressed or reduced.

The flame retardant inactive member 40 may have, for example, a single layer structure. In some embodiments, the flame retardant inactive member 40 may have a multilayer structure. Each layer of the flame retardant inactive member 40 having a multi-layer structure may have a different composition. The flame retardant inactive member having a multi-layer structure may have, for example, a bi-layer structure, a tri-layer structure, a quadra-layer structure or a penta-layer structure. The flame retardant inactive member 40 having a multi-layer structure may include, for example, one or more adhesive layers and one or more support layers. An adhesive layer may effectively prevent (or reduce) the separation between the cathode layer 10 and the solid electrolyte layer 30 due, for example, to a volume change of the cathode layer 10 generated during a charge/discharge process of the all-solid secondary battery 1, and may improve the strength of the inactive member 40 film by providing a binding strength between a support layer and another layer. A support layer may provide a supporting strength to the flame retardant inactive member 40 and may prevent (or reduce) the solid electrolyte layer 30 from being unevenly pressurized in the pressurization or a charge/discharge process, and may prevent (or reduce) deformation of the all-solid secondary battery 1.

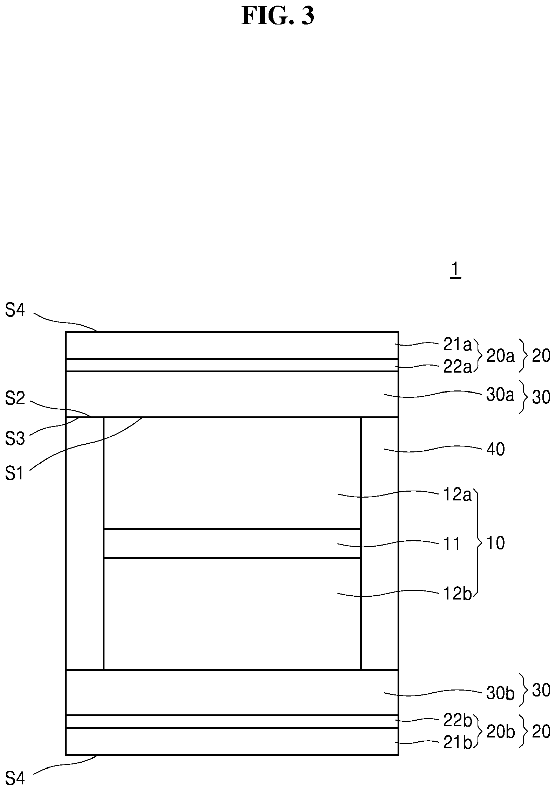

Referring to FIG. 3, the all-solid secondary battery 1 includes: a cathode layer 10; and anode layer 20; and a solid electrolyte layer 30 between the cathode layer 10 and the anode layer 20, wherein the cathode layer 10 includes a positive electrode current collector 11 and a first positive active material layer 12a and a second positive active material layer 12b respectively on both (e.g., top and bottom) sides of the positive electrode current collector 11, the solid electrolyte layer 30 may include a first solid electrolyte layer 30a in contact with the first positive active material layer 12a and a second solid electrolyte layer 30b in contact with the second positive active material layer 12b, the anode layer 20 may include a first anode layer 20a (includes 21a and 22a) in contact with the first solid electrolyte layer 30a and a second anode layer 20b (includes 21b and 22b) in contact with the second solid electrolyte layer 30b, and the flame retardant inactive member 40 may be around (e.g., surrounding) the cathode layer 10 between the first solid electrolyte layer 30a and the second solid electrolyte layer 30b facing each other. Therefore, the all-solid secondary battery 1 may have a bi-cell structure. As the all-solid secondary battery 1 may have such a bi-cell structure, the solid electrolyte layer 30 and the anode layer 20 may be arranged facing each other substantially symmetrically, and the deformation of the all-solid secondary battery 1 due to a pressure applied at the time of a manufacture may be effectively suppressed or reduced. Therefore, cracks of the solid electrolyte layer 30 occurring at the time of a manufacture and/or a charge/discharge process may be suppressed or reduced, and thereby a short circuit occurrence of the all-solid secondary battery may be prevented or reduced and the cycle characteristics of the all-solid secondary battery may be further improved. Further, because only one positive electrode current collector 11 may be utilized for the plurality of positive active material layers 12a and 12b, the energy density of the all-solid secondary battery 1 may be increased.

Referring to FIGS. 1 to 3, the flame retardant inactive member 40 includes a matrix and a filler.

The matrix includes a substrate and a reinforcing agent. The matrix includes a substantially fibrous substrate and a substantially fibrous reinforcing agent.

As the matrix includes a substrate, the matrix has elasticity. Thus, the matrix effectively supplements for the volume change during a charge/discharge process of the all-solid secondary battery 1 and may be at one or more suitable locations.

The substrate included in the matrix includes, for example, a first fibrous material. As the substrate includes a first fibrous material, it effectively supplements for the volume change of the cathode layer 30 generated during a charge/discharge process of the all-solid secondary battery 1, and the deformation of the flame retardant inactive member 40 due to a volume change of the cathode layer 30 can be effectively suppressed or reduced. The first fibrous material may have, for example, an aspect ratio of 5 or more, 20 or more, or 50 or more. The first fibrous material may have, for example, an aspect ratio of 5 to 1000, 20 to 1000, or 50 to 1000.

The first fibrous material may be, for example, an insulating material. As the first fibrous material may be an insulating material, it may effectively prevent or reduce a short circuit between the cathode layer 30 and the anode layer 20 due to a lithium dendrite which forms during a charge/discharge process of the all-solid secondary battery 1.

The first fibrous material may include, for example, at least one material/substance selected from pulp fibers, insulating polymer fibers, and/or ion-conductive polymer fibers. Pulp fibers are fibers obtained from plant materials. Pulp fibers may include, for example, cellulose fibers. The cellulose fibers may be a cellulose microfiber or a cellulose nanofiber. Insulating polymer fibers may be, for example, polyimide fibers, polyaramid fibers, polyethylene fibers, polyphenylene sulfide fibers, and/or the like. Ion-conductive polymer fibers may be, for example, polystyrenesulfonate (PSS) fibers, polyvinylidene fluoride-hexafluoropropylene (PVDF-HFP) copolymer fibers, polyvinyl fluoride (PVF) fibers, and/or polyvinylidene fluoride (PVDF) fibers. The strength of the matrix may be improved as the matrix includes a reinforcing agent. Therefore, the matrix may prevent or reduce an excessive volume change at a charge/discharge process of the all-solid secondary battery 1 and prevent or reduce deformation of the all-solid secondary battery 1.

The reinforcing agent included in the matrix may include, for example, a second fibrous material. As the reinforcing agent includes a second fibrous material, the strength of the matrix may be more evenly increased. The second fibrous material may have, for example, an aspect ratio of 3 or more, 5 or more, or 10 or more. The second fibrous material may have, for example, an aspect ratio of 3 to 100, 5 to 100, or 10 to 100.

The second fibrous material may be, for example, a flame retardant material. As the second fibrous material may be a flame retardant material, the ignition due to a thermal runaway generated by a charge/discharge process of the all-solid secondary battery 1 or an external impact, may be effectively suppressed or reduced. The second fibrous material may be, for example, glass fibers, metal oxide fibers, ceramic fibers, and/or the like. A glass fiber may be determined by the composition of the metal oxide constituting the glass. Glass fibers may be, for example, silicate glass fibers. Metal oxide fibers are, for example, silica (SiO₂) fibers, alumina (Al₂O₃) fibers, bohemite fibers, and/or the like. Ceramic fibers may be, for example, silicon carbide fibers.

The content (e.g., amount) of the substrate included in the flame retardant inactive member 40 may be, for example, 5 parts by weight to 80 parts by weight, 5 parts by weight to 70 parts by weight, 5 parts by weight to 60 parts by weight, 5 parts by weight to 50 parts by weight, 5 parts by weight to 40 parts by weight, or 5 parts by weight to 30 parts by weight, with respect to 100 parts by weight of the flame retardant inactive member 40.

The content (e.g., amount) of the reinforcing agent included in the flame retardant inactive member 40 may be, for example, 4 parts by weight to 40 parts by weight, 4 parts by weight to 30 parts by weight, 4 parts by weight to 25 parts by weight, 4 parts by weight to 20 parts by weight, or 4 parts by weight to 15 parts by weight, with respect to 100 parts by weight of the flame retardant inactive member 40.

The flame retardant inactive member 40 may include a filler in addition to the matrix. The filler may be inside the matrix, or on the surface of the matrix, or both (e.g., simultaneously) inside and on the surface. The filler may be, for example, an inorganic material.

The filler included in the flame retardant inactive member 40 may be, for example, a moisture getter (adsorbs moisture). The filler, for example, by adsorbing moisture at a temperature of less than 100 °C may remove or decrease the remaining moisture in the all-solid secondary battery 1 and may prevent or reduce deterioration of the all-solid secondary battery 1. Further, when the temperature of the all-solid secondary battery 1 is increased to 150 °C or more due to a thermal runaway generated by a charge/discharge process or an external impact, the filler may release the adsorbed moisture, and the ignition of the all-solid secondary battery 1 may be effectively suppressed or reduced. For example, the filler is, for example, a flame retardant. The filler may be, for example, a moisture adsorbent metal hydroxide. A metal hydroxide included in the filler may be, for example, Mg(OH)₂, Fe(OH)₃, Sb(OH)₃, Sn(OH)₄, Tl(OH)₃, Zr(OH)₄, Al(OH)₃ or one or more combinations thereof.

The content (e.g., amount) of the filler included in the flame retardant inactive member 40 may be, for example, 10 parts by weight to 80 parts by weight, 20 parts by weight to 80 parts by weight, 30 parts by weight to 80 parts by weight, 40 parts by weight to 80 parts by weight, 50 parts by weight to 80 parts by weight, or 60 parts by weight to 80 parts by weight, or 65 parts by weight to 80 parts by weight, with respect to 100 parts by weight of the flame retardant inactive member 40.

The flame retardant inactive member 40 may include, for example, a binder. The binder may include, for example, a thermosetting polymer. A thermosetting polymer may be a polymer that is cured by heat and/or pressure. The thermosetting polymer may be, for example, a solid at room temperature. The flame retardant inactive member 40 may include, for example, a thermosetting film and/or a cured product thereof. A thermosetting polymer may be, for example, Toray's TSA-66. In some embodiments, the binder may include a general binder utilized in the art. The binder may be, for example, a fluorine-based binder such as polyvinylidene fluoride, or an acrylic binder such as polyacrylate.

The content (e.g., amount) of the binder included in the flame retardant inactive member 40 may be, for example, 1 part by weight to 10 parts by weight, 1 part by weight to 5 parts by weight, or 1 part by weight to 3 parts by weight, with respect to 100 parts by weight of the flame retardant inactive member 40.

The flame retardant inactive member 40 may further include other suitable materials in addition to the above-described substrate, reinforcing agent, filler and binder. The flame retardant inactive member 40 may further include one or more materials/substances selected from, for example, a paper, an insulating polymer, an ion-conductive polymer, an insulating inorganic material, an oxide-based solid electrolyte, and a sulfide-based solid electrolyte. The insulating polymer may be, for example, an olefin-based polymer such as polypropylene (PP) and/or polyethylene (PE).

The content (e.g., amount) of the other suitable materials further included in the flame retardant inactive member 40 may be, for example, 1 part by weight to 30 parts by weight, 1 part by weight to 20 parts by weight, 1 part by weight to 10 parts by weight, 1 part by weight to 5 parts by weight, or 1 part by weight to 3 parts by weight, with respect to 100 parts by weight of the flame retardant inactive member 40.

A density of the substrate or the reinforcing agent included in the flame retardant inactive member 40 may be, for example, 10 % to 300 %, 10 % to 150 %, and 10 % to 140 %, 10 % to 130 %, or 10 % to 120 % of a density of the positive active material included in the positive active material layer 12.

A density of the substrate may be, for example, 10 % to 300 %, 10 % to 150 %, 10 % to 140 %, 10 % to 130 %, or 10 % to 120 % of a density of the positive active material included in the positive active material layer 12. A density of the substrate may be, for example, 50 % to 200 % of a density of the positive active material included in the positive active material layer 12. A density of the reinforcing agent may be, for example, 50 % to 300 %, 50 % to 150 %, 50 % to 140 %, 50 % to 130 %, or 50 % to 120 % of a density of the solid electrolyte included in the solid electrolyte layer 30. A density of the reinforcing agent may be, for example, 50 % to 200 % of a density of the solid electrolyte included in the solid electrolyte layer 30.

The flame retardant inactive member 40 may be a member that does not include (e.g., may exclude) a material with a electrochemical activity, such as an electrode active material. An electrode active material may be a material that occludes/releases lithium. The flame retardant inactive member 40 may be a member composed of a material utilized in the art other than an electrode active material. These materials should be apparent to one of ordinary skill in the art upon reviewing the present disclosure.

### Cathode Layer: Conductive Flame Retardant Inactive Member

A conductive flame retardant inactive member 110 may be on one side of the cathode layer 10.

The conductive flame retardant inactive member 110 may be differentiated from a flame retardant inactive member 40 in that it additionally may include a conductive material and has a conductivity.

The conductive material may be, for example, graphite, carbon black, acetylene black, ketjen black, denka black, carbon fiber, carbon nanotubes (CNT), graphene, metal fibers, and/or metal powder. The conductivity of the conductive flame retardant inactive member 110 at 25 °C may be, for example, more than 1,000 times more or more than 10,000 times more the conductivity of a flame retardant inactive member 40 at 25 °C.

The content (e.g., amount) of the substrate included in the conductive flame retardant inactive member 110 may be, for example, 5 parts by weight to 80 parts by weight, 5 parts by weight to 70 parts by weight, 5 parts by weight to 60 parts by weight, 5 parts by weight to 50 parts by weight, 5 parts by weight to 40 parts by weight, 5 parts by weight to 30 parts by weight, or 5 parts by weight to 35 parts by weight, with respect to 100 parts by weight of the flame retardant inactive member 110.

The content (e.g., amount) of the reinforcing agent included in the conductive flame retardant inactive member 110 may be, for example, 4 parts by weight to 40 parts by weight, 4 parts by weight to 30 parts by weight, 4 parts by weight to 25 parts by weight, 4 parts by weight to 20 parts by weight, 4 parts by weight to 15 parts by weight, 4 parts by weight to 10 parts by weight, or 6 parts by weight to 8 parts by weight, with respect to 100 parts by weight of the conductive flame retardant inactive member 110.

The content (e.g., amount) of the filler included in the conductive flame retardant inactive member 110 may be, for example, 10 parts by weight to 80 parts by weight, 20 parts by weight to 80 parts by weight, 30 parts by weight to 80 parts by weight, 40 parts by weight to 80 parts by weight, 50 parts by weight to 80 parts by weight, or 50 parts by weight to 70 parts by weight, or 50 parts by weight to 60 parts by weight, with respect to 100 parts by weight of the conductive flame retardant inactive member 110.

The content (e.g., amount) of the binder included in the conductive flame retardant inactive member 110 may be, for example, 1 part by weight to 10 parts by weight, 1 part by weight to 5 parts by weight, or 1 part by weight to 3 parts by weight, with respect to 100 parts by weight of the conductive flame retardant inactive member 110.

The content (e.g., amount) of the conductive material included in the conductive flame retardant inactive member 110 may be, for example, 1 part by weight to 30 parts by weight, 5 parts by weight to 30 parts by weight, 10 parts by weight to 30 parts by weight, or 15 parts by weight to 30 parts by weight, with respect to 100 parts by weight of the conductive flame retardant inactive member 110.

Additional description of a substrate, a reinforcing agent, a filler, a binder, and other additional materials included in the conductive flame retardant inactive member 110 may be found, for example, in the section (in the present disclosure) for a flame retardant inactive member 40.

### Cathode Layer: Positive Active Material

Positive active material layer 12 may include, for example, a positive active material and a solid electrolyte. The solid electrolyte included in the cathode layer 10 may be substantially similar to or different from the solid electrolyte included in the solid electrolyte layer 30. Additional description of the solid electrolyte may be found in the section (in the present disclosure) for a solid electrolyte layer 30.

Positive active material may be a positive active material that may reversibly absorb or desorb lithium-ions. The positive active material may be for example, a lithium transition metal oxide, such as lithium cobalt oxide (LCO), lithium nickel oxide, lithium nickel cobalt oxide, lithium nickel cobalt aluminum hydroxide (NCA), lithium nickel cobalt manganate (NCM), lithium manganate, or lithium iron phosphate, nickel sulfide, copper sulfide, lithium sulfide, iron oxide, vanadium oxide, and/or the like, but is not limited thereto, and any suitable positive active material may be utilized. These materials should be apparent to one of ordinary skill in the art upon reviewing the present disclosure. The positive active material may be composed of one positive active material or a mixture (or mixtures) of two or more positive active materials.

The lithium transition metal oxide may be for example, a compound represented by any one of the formulas LiₐA_{1-b}B_{b}D₂(where 0.90 ≤ a ≤ 1, and 0 ≤ b ≤ 0.5); LiₐE_{1-b}B_{b}O_{2-c}D_{c}(where 0.90 ≤ a ≤ 1, 0 ≤ b ≤ 0.5, and 0 ≤ c ≤ 0.05); LiE_{2-b}B_{b}O₄-_{c}D_{c}(where 0 ≤ b ≤ 0.5, and 0 ≤ c ≤ 0.05); LiₐNi_{1-b-c}Co_{b}B_{c}D_{α}(where 0.90 ≤ a ≤ 1, 0 ≤ b ≤ 0.5, 0 ≤ c ≤ 0.05, and 0 < α ≤ 2); LiₐNi_{1-b-c}Co_{b}B_{c}O_{2-α}Fₐ(where 0.90 ≤ a ≤ 1, 0 ≤ b ≤ 0.5, 0 ≤ c ≤ 0.05, and 0 < α < 2); LiₐNi_{1-b-c}Co_{b}B_{c}O_{2-α}F₂(where 0.90 ≤ a ≤ 1, 0 ≤ b ≤ 0.5, 0 ≤ c ≤ 0.05, and 0 < α < 2); LiₐNi_{1-b-c}Mn_{b}B_{c}D_{α}(where 0.90 ≤ a ≤ 1, 0 ≤ b ≤ 0.5, 0 ≤ c ≤ 0.05, and 0 < α ≤ 2); LiₐNi_{1-b-c}Mn_{b}B_{c}O_{2-α}F_{α}(where 0.90 ≤ a ≤ 1, 0 ≤ b ≤ 0.5, 0 ≤ c ≤ 0.05, and 0 < α < 2); LiₐNi_{1-b-c}Mn_{b}B_{c}O_{2-α}F₂(where 0.90 ≤ a ≤ 1, 0 ≤ b ≤ 0.5, 0 ≤ c ≤ 0.05, and 0 < α < 2); LiₐNi_{b}E_{c}G_{d}O₂(where 0.90 ≤ a ≤ 1, 0 ≤ b ≤ 0.9, 0 ≤ c ≤ 0.5 and 0.001 ≤ d ≤ 0.1); LiₐNi_{b}Co_{c}Mn_{d}GeO₂(where 0.90 ≤ a ≤ 1, 0 ≤ b ≤ 0.9, 0 ≤ c ≤ 0.5, 0 ≤ d ≤0.5, and 0.001 ≤ e ≤ 0.1); LiₐNiG_{b}O₂(where 0.90 ≤ a ≤ 1, and 0.001 ≤ b ≤ 0.1); LiₐCoG_{b}O₂(where, 0.90 ≤ a ≤ 1 and 0.001 ≤ b ≤ 0.1); LiₐMnG_{b}O₂(where 0.90 ≤ a ≤ 1, and 0.001 ≤ b ≤ 0.1); LiₐMn₂G_{b}O₄(where 0.90 ≤ a ≤ 1 and 0.001 ≤ b ≤ 0.1); QO₂; QS₂; LiQS₂; V₂O₅; LiV₂O₅; LiIO₂; LiNiVO₄; Li_{(3-f)}J₂(PO₄)₃(O ≤ f ≤ 2); Li_{(3-f)}Fe₂(PO₄)₃(0 ≤ f ≤ 2); LiFePO₄. In such a compound, A is Ni, Co, Mn, or one or more combinations thereof; B is Al, Ni, Co, Mn, Cr, Fe, Mg, Sr, V, a rare earth element or one or more combinations thereof; D is O, F, S, P, or one or more combinations thereof; E is Co, Mn, or one or more combinations thereof; F is F, S, P, or one or more combinations thereof; G is Al, Cr, Mn, Fe, Mg, La, Ce, Sr, V, or one or more combinations thereof; Q is Ti, Mo, Mn, or one or more combinations thereof; I is Cr, V, Fe, Sc, Y, or one or more combinations; J is V, Cr, Mn, Co, Ni, Cu, or one or more combinations thereof. It is also possible to utilize a compound having a coating layer added to the surface of the compound, or a mixture of the above-described compound and a compound with a coating layer. The coating layer added to the surface of such a compound includes compounds of a coating element, for example, oxides of a coating element, hydroxides of a coating element, oxyhydroxides of a coating element, oxycarbonate of a coating element, or hydroxycarbonates of a coating element. The compound that forms such a coating layer may be amorphous or crystalline. A coating element included in the coating layer is Mg, Al, Co, K, Na, Ca, Si, Ti, V, Sn, Ge, Ga, B, As, Zr, or a mixture (or one or more mixtures) thereof. A coating layer formation method may be selected within a range that does not adversely affect the physical properties of the positive active material. A coating method is, for example, a spray coating, an immersion method, and/or the like. Specific coating methods should be apparent to one of ordinary skill in the art upon reviewing the present disclosure, and a detailed description thereof will not be provided.

The positive active material may include, for example, a lithium salt of a transition metal oxide which has a layered rock salt type or kind structure among the above-described lithium transition metal oxides. "Layered rock salt type or kind structure" may be for example, a structure in which oxygen atom layers and metal atom layers are alternately arranged in the direction of <111 > of a cubic rock salt type or kind structure, and thereby, each atom layer forms a two-dimensional plane. "Cubic rock salt type or kind structure" may be a structure of sodium chloride (NaCl) type or kind which is a kind of a crystal structure, and for example, face centered cubic (fcc) lattices each formed by cations and anions are displaced from each other by 1/2 of the ridge of the unit lattice. The lithium transition metal oxide having such a layered rock salt type or kind structure may be, for example, a three-element lithium transition metal oxide such as LiNiₓCo_{y}Al_{z}O₂ (NCA) or LiNiₓCo_{y}Mn_{z}O₂ (NCM) (0 < x < 1, 0 < y < 1, 0 < z < 1, and x + y + z = 1) and/or the like. When a positive active material includes a three-element lithium transition metal oxide having a layered rock type or kind structure, the energy density and thermal stability of the all-solid secondary battery 1 may be further improved.

The positive active material may be covered by a coating layer as described above. The coating layer may be any material that is suitable as a coating layer for a positive active material of an all-solid secondary battery. These materials should be apparent to one of ordinary skill in the art upon reviewing the present disclosure. The coating layer may be, for example, Li₂O-ZrO₂ (LZO).

When the positive active material is, for example, a three-element lithium transition metal oxide such as NCA or NCM and contain nickel (Ni), by increasing the capacity density of the all-solid secondary battery, it may be possible to decrease the metal elution of the positive active material in a charging state. As a result, the cycle properties of an all-solid secondary battery 1 in a charging state may be improved.

The shape of the positive active material may be, for example, a particle shape such as a substantially true sphere, an elliptical sphere, and/or the like. The particle diameter of the positive active material is not limited and may be in a range applicable to a positive active material of the all-solid secondary battery. An amount of the positive active material of the cathode layer 10 is not limited either, and it may be in a range applicable to a cathode layer of the all-solid secondary battery.

### Cathode Layer: Solid Electrolyte

The positive active material layer 12 may include, for example, a solid electrolyte. A solid electrolyte included in a cathode layer 10 may be substantially the same as or different from a solid electrolyte included in a solid electrolyte layer 30. Additional description of the solid electrolyte may be found, for example, in the section (in the present disclosure) for a solid electrolyte layer 30.

The solid electrolyte included in the positive active material layer 12 may have a smaller D₅₀ average particle diameter compared to the solid electrolyte included in the solid electrolyte layer 30. For example, D₅₀ average particle diameter of the solid electrolyte included in the positive active material layer 12 may be, compared to the average particle diameter of the solid electrolyte included in the solid electrolyte layer 30, 90% or less, 80% or less, 70% or less, 60% or less, 50% or less, 40% or less, 30% or less, or 20% or less.

D₅₀ average particle diameter may be, for example, a median particle diameter. The median particle diameter (D₅₀) is the size of the particle corresponding to a 50% cumulative volume when the volume is calculated from a side of the smallest particles in the particle size distribution measured by, for example, a laser diffraction method.

### Cathode Layer: Binder

The positive active material layer 12 may include a binder. The binder may be, for example, styrene butadiene rubber (SBR), polytetrafluoroethylene, polyvinylidene fluoride, polyethylene, and/or the like but is not limited thereto, and any suitable binder may be utilized. These binders/materials should be apparent to one of ordinary skill in the art upon reviewing the present disclosure.

### Cathode Layer: Conductive Material

The positive active material layer 12 may include a conductive material. The conductive material may be, for example, graphite, carbon black, acetylene black, ketjen black, carbon fiber, metal powder, and/or the like but is not limited thereto, and any suitable conductive material may be utilized. These materials should be apparent to one of ordinary skill in the art upon reviewing the present disclosure.

### Cathode Layer: Other Additives

The positive active material layer 12 may further include an additive such as a filler, a coating material, a dispersant, an ion conductivity supplement, and/or the like, in addition to the above-described positive active material, the solid electrolyte, the binder, and/or the conductive material.

As a filler, a coating material, a dispersant, an ion conductivity supplement, and/or the like that may be included in the positive active material layer 12, any suitable material utilized in an electrode of an all-solid secondary battery may be utilized. These materials should be apparent to one of ordinary skill in the art upon reviewing the present disclosure.

### Cathode Layer: Positive Electrode Current Collector

For the positive electrode current collector 11, a plate or foil made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy (or one or more alloys) thereof, may be utilized. The positive electrode collector 11 may not be provided. A thickness of the positive electrode current collector 11 may be, for example, 1 µm to 100 µm, 1 µm to 50 µm, 5 µm to 25 µm, or 10 µm to 20 µm.

### Solid Electrolyte Layer

### Solid Electrolyte Layer: Solid Electrolyte

Referring to FIGS. 1 to 4, the solid electrolyte layer 30 may include a solid electrolyte between the cathode layer 10 and the anode layer 20.

The solid electrolyte may be, for example, a sulfide-based solid electrolyte. The sulfide-based solid electrolyte may be, for example, one or more compounds/substances selected from, Li₂S-P₂S₅, Li₂S-P₂S₅-LiX (where X is a halogen), Li₂S-P₂S₅-Li₂O, Li₂S-P₂S₅-Li₂O-Lil, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, (where m and n are positive numbers, and Z is one element selected from Ge, Zn, and Ga), Li₂S-GeS₂, Li₂S-SiS₂-Li₃PO₄, Li₂S-SiS₂-LiₚMO_{q} (where p and q are positive numbers, and M is one element selected from P, Si, Ge, B, Al, Ga, and In), Li₇₋ₓPS₆-ₓClₓ (0≤x≤2), Li₇₋ₓPS₆₋ₓBrₓ (0≤x≤2), and Li₇₋ₓPS₆₋ₓIₓ (0≤x≤2). A sulfide-based solid electrolyte may be prepared by, for example, treating the raw material such as Li₂S or P₂S₅ by melt quenching or a mechanical milling method. In some embodiments, after this treatment, a heat treatment may be performed. The solid electrolyte may be in an amorphous state, a crystalline state or, in a mixed state of these. In some embodiments, the solid electrolyte, for example, may include at least as constituent elements, sulfur (S), phosphorus (P) and/or lithium (Li) among the above-described sulfide solid electrolyte materials. For example, the solid electrolyte may be a material including Li₂S-P₂S₅. When a compound that includes Li₂S-P₂S₅ is utilized as a sulfide-based solid electrolyte material that forms a solid electrolyte, the molar ratio of Li₂S and P₂S₅ for mixing may be, for example, in the range of Li₂S : P₂S₅ = 50 : 50 to 90 : 10 .

The sulfide solid electrolyte may include, for example, an argyrodite type or kind solid electrolyte represented by Formula 1.

**Formula 1** Li+₁₂₋ₙ₋ₓAⁿ⁺X²⁻₆₋ₓY⁻ₓ,

wherein A is P, As, Ge, Ga, Sb, Si, Sn, Al, In, Ti, V, Nb or Ta, X is S, Se or Te, Y is Cl, Br, I, F, CN, OCN, SCN, or N₃, 1≤n≤5, and 0≤x≤2. The sulfide solid electrolyte may be, for example, an argyrodite-type or kind compound including at least one compound/substance selected from Li₇₋ₓPS₆₋ₓClₓ, (0≤x≤2), Li₇₋ₓPS₆₋ₓBrₓ, (0≤x≤2), and/or Li₇₋ₓPS₆₋ₓIₓ, (0≤x≤2). The sulfide solid electrolyte may be an argyrodite-type or kind compound including at least one compound/substance selected from Li₆PS₅Cl, Li₆PS₅Br and Li₆PS₅I.

The density of the argyrodite-type or kind solid electrolyte may be 1.5 g/cc to 2.0 g/cc. As the argyrodite-type or kind solid electrolyte may have a density of 1.5 g/cc or more, the internal resistance of the all-solid secondary battery may be decreased, and the penetration of a solid electrolyte layer by lithium (Li) may be effectively suppressed or reduced.

### Solid Electrolyte Layer: Binder

A solid electrolyte layer 30 may include, for example, a binder. A binder included in the solid electrolyte layer 30 may be, for example, styrene butadiene rubber (SBR), polytetrafluoroethylene, polyvinylidene fluoride, polyethylene, and/or the like, but is not limited thereto, and any suitable binder may be utilized. These binders should be apparent to one of ordinary skill in the art upon reviewing the present disclosure. The binder in the solid electrolyte layer 30 may be substantially the same as or different from the binder included in the positive active material layer 12 and/or the negative active material layer 22. A binder may not be provided.

The content (e.g., amount) of the binder included in the solid electrolyte layer 30 may be 0 to 10 wt%, 0 to 5 wt%, 0 to 3 wt%, 0 to 1 wt%, 0 to 0.5 wt%, or 0 to 0.1 wt%, with respect to the total weight of the solid electrolyte layer 30.

### Anode Layer

### Anode Layer: Negative Active Material

A first negative active material layer 22 may include for example, a negative active material and a binder.

The negative active material included in the first negative active material layer 22 may have, for example, a particle form. The average particle diameter of the negative active material having a particle form is, for example, 4 µm or less, 3 µm or less, 2 µm or less, 1 µm or less, or 900 nm or less. The average particle diameter of the negative active material having a particle form is, for example, 10 nm to 4 µm, 10 nm to 3 µm, 10 nm to 2 µm or less, 10 nm to 1 µm, or 10 nm to 900 nm. The reversible absorption and/or desorption of lithium during a charge/discharge process may be easier, when the negative active material has the average particle diameter in the foregoing ranges. The average particle diameter of the negative active material may be, for example, a median diameter (D₅₀) measured utilizing a laser particle size distribution device.

The negative active material included in the first negative active material layer 22 may include at least one material/substance/compound selected from a carbon-based negative active material, metal negative active material and metalloid negative active material.

A carbon-based negative active material may be for example amorphous carbon. Amorphous carbon may be, for example, carbon black (CB), acetylene black (AB), furnace black (FB), ketjen black (KB), graphene, and/or the like, but is not limited thereto, and all material classified as an amorphous carbon in the art may be utilized. These materials should be apparent to one of ordinary skill in the art upon reviewing the present disclosure. Amorphous carbon has a very low or no crystallinity and is distinguished from crystalline carbon or graphite carbon.

A metal or metalloid negative active material may include at least one element selected from the group including (e.g., consisting of) gold (Au), platinum (Pt), palladium (Pd), silicon (Si), silver (Ag), aluminum (Al), bismuth (Bi), tin (Sn) and zinc (Zn), but is not limited thereto, and all materials/elements/alloys utilized as a metal negative active material or metalloid negative active material forming alloys or compounds with lithium in the art may be utilized. These materials/elements/alloys should be apparent to one of ordinary skill in the art upon reviewing the present disclosure. For example, nickel (Ni) may not be a negative active material because it does not form alloys with lithium.

The first negative active material layer 22 may include a kind of a negative active material, or a mixture (or mixtures) of multiple different negative active materials. For example, the first negative active material layer 22 may include amorphous carbon only and/or, one or more elements selected from the group including (e.g., consisting of) gold (Au), platinum (Pt), palladium (Pd), silicon (Si), silver (Ag), aluminum (Al), bismuth (Bi), tin (Sn), and zinc (Zn). In some embodiments, the first negative active material layer 22 includes a mixture of amorphous carbon and one or more elements selected from the group including (e.g., consisting of) gold (Au), platinum (Pt), palladium (Pd), silicon (Si), silver (Ag), aluminum (Al), bismuth (Bi), tin (Sn), and zinc (Zn). The mixing ratio of the mixture of amorphous carbon and gold and/or the like may be, for example, 10:1 to 1:2, 5:1 to 1:1, or 4:1 to 2:1, but is not limited thereto, and ratio is selected according to the properties of the all-solid secondary battery 1 that are desired. As the negative active material has such a composition, the cycle properties of the all-solid secondary battery 1 may be further improved.

The negative active material included in the first negative active material layer 22 may include, for example, a mixture of first particles made of amorphous carbon and second particles made of a metal or a metalloid. The metal or metalloid, for example, may include gold (Au), platinum (Pt), palladium (Pd), silicon (Si), silver (Ag), aluminum (Al), bismuth (Bi), tin (Sn), and/or zinc (Zn). A metalloid may be, alternatively, a semiconductor. An amount of the second particle may be, with respect to the total weight of the mixture, 8 wt% to 60 wt%, 10 wt% to 50 wt%, 15 wt% to 40 wt%, or 20 wt% to 30 wt%. As the amount of the second particle is in the foregoing ranges, for example, the cycle properties of the all-solid secondary battery 1 may be further improved.

### Anode Layer: Binder

The binder included in the first negative active material layer 22 may be, for example, styrene-butadiene rubber (SBR), polytetrafluoroethylene, polyvinylhylidene fluoride, polyethylene, vinylidene fluoride/hexafluoropropylene copolymers, polyacrylonitrile, polymethyl methacrylate, and/or the like, but is not limited thereto, and any suitable binder in the art may be utilized. These binders should be apparent to one of ordinary skill in the art upon reviewing the present disclosure. The binder may be composed of one binder or multiple different binders.

As the first negative active material layer 22 includes a binder, the first negative active material layer 22 may be stabilized on the negative electrode current collector 21. Further, in a charge/discharge process, despite the volume change and/or relative position change of the first negative active material layer 22, the cracking of the first negative active material layer 22 may be suppressed or reduced. For example, when the first negative active material layer 22 does not include a binder, it may be possible to easily separate the first negative active material layer 22 from the negative electrode current collector 21. In the portion of the first negative active material layer 22 disengaged from the negative electrode current collector 21, the negative electrode current collector 21 may be exposed and contacts the solid electrolyte layer 30, and a short circuit may be more likely to occur. The first negative active material layer 22 may be prepared by, for example, applying the slurry where materials that make up the first negative active material layer 22 are dispersed, on the negative electrode current collector 21, and by drying it. By including a binder in the first negative active material layer 22, the negative active material in the slurry may be dispersed stably. For example, when the slurry is applied on the negative electrode current collector 21 by a screen printing method, it may be possible to suppress or reduce the clogging of the screen (for example, clogging by agglomerates of the negative active material).

### Anode Layer: Other Additives

The first negative active material layer 22 may further include an additive utilized for an all-solid secondary battery, such as a filler, a coating material, a dispersant, an ion conductivity supplement, and/or the like.

### Anode Layer: first negative Active Material Layer

A thickness of the first negative active material layer 22 may be, for example, 50% or less, 40% or less, 30% or less, 20% or less, 10% or less, or 5% or less of a thickness of the positive active material layer 12. A thickness of the first negative active material layer 22 may be, for example, 1 µm to 20 µm, 2 µm to 10 µm, or 3 µm to 7 µm. When the first negative active material layer 22 is excessively thin (e.g., outside of the foregoing ranges), lithium dendrite formed between the first negative active material layer 22 and the negative electrode current collector 21 may collapse the first negative active material layer 22, and the cycle properties of the all-solid secondary battery 1 may be difficult to be improved upon. When a thickness of the first negative active material layer 22 is excessively increased (e.g., outside of the foregoing ranges), the energy density of the all-solid secondary battery 1 may be lowered, and the internal resistance of the all-solid secondary battery 1 may be increased by the first negative active material layer 22, and the cycle properties of the all-solid secondary battery 1 may be difficult to be improved upon.

When a thickness of the first negative active material layer 22 is reduced, for example, the charge capacity of the first negative active material layer 22 may also be reduced. The charge capacity of the first negative active material layer 22 may be, for example, 50% or less, 40% or less, 30% or less, 20% or less, 10% or less, 5% or less, or 2% or less, compared to the charge capacity of the positive active material layer 12. The charge capacity of the first negative active material layer 22 may be, for example, 0.1% to 50%, 0.1% to 40%, 0.1% to 30%, 0.1% to 20%, 0.1% to 10%, 0.1% to 5%, or 0.1% to 2%, of the charge capacity of the positive active material layer 12. When the charge capacity of the first negative active material layer 22 is excessively small (e.g., outside of the foregoing ranges), the first negative active material layer 22 may become very thin, and the lithium dendrite formed between the first negative active material layer 22 and the negative electrode current collector 21 in the repeated charge/discharge processes, collapses the first negative active material layer 22 and the cycle properties of the all-solid secondary battery 1 may be difficult to be improved upon. When the charge capacity of the first negative active material layer 22 is excessively increased (e.g., outside of the foregoing ranges), the energy density of the all-solid secondary battery 1 may be lowered, and the internal resistance of the all-solid secondary battery 1 may be increased by the first negative active material layer 22, and the cycle properties of the all-solid secondary battery 1 may be difficult to be improved upon.

The charge capacity of the positive active material layer 12 may be obtained by multiplying the charge capacity density (mAh/g) of the positive active material by the mass of the positive active material in the positive active material layer 12. When different kinds of positive active materials are utilized, the value of charge capacity density × mass may be calculated for each positive active material, and the total sum of all the values is the charge capacity of the positive active material layer 12. The charge capacity of the first negative active material layer 22 is calculated in substantially the same way. For example, the charge capacity of the first negative active material layer 22 may be obtained by multiplying the charge capacity density (mAh/g) of the negative active material by the mass of the negative active material of the first negative active material layer 22. When different kinds of negative active materials are utilized, the value of charge capacity density × mass may be calculated for each negative active material, and the total sum of all the values is the capacity of the first negative active material layer 22. In an embodiment, the charge capacity density of the positive active material and the negative active material may be estimated by utilizing an all-solid half-cell that uses lithium metal as a relative electrode. The charge capacity of the positive active material layer 12 and the first negative active material layer 22 may be directly measured by utilizing the charge capacity measurement utilizing an all-solid half-cell. Charge capacity density may be obtained by dividing the measured charge capacity by the mass of each active material. In some embodiments, the charge capacity of the positive active material layer 12 and the first negative active material layer 22 may be the initial charge capacity measured at the first cycle.

### Anode Layer: secondary negative Active Material Layer

The all-solid secondary battery 1 may further include by charging, for example, the second negative active material layer between the negative electrode current collector 21 and the first negative active material layer 22. The second negative active material layer may be a metal layer including lithium or a lithium alloy. The metal layer may include lithium or a lithium alloy. Thus, because the second negative active material layer may be a metal layer including lithium, it may act as, for example, a lithium reservoir. A lithium alloy, for example, may be Li-Al alloy, Li-Sn alloy, Li-In alloy, Li-Ag alloy, Li-Au alloy, Li-Zn alloy, Li-Ge alloy, Li-Si alloy, and/or the like, but is not limited thereto, and any suitable lithium alloy in the art may be utilized. These lithium alloys should be apparent to one of ordinary skill in the art upon reviewing the present disclosure. The second negative active material layer may be made of one or more of the foregoing alloys or lithium or one or more combinations thereof, or different kinds of alloys. The second negative active material layer may be, for example, a plated layer. The second negative active material layer may be eluted between the first negative active material layer 22 and the negative electrode current collector 21 during a charging process of the all-solid secondary battery 1.

A thickness of the second negative active material layer is not limited and the following ranges are merely examples: 1 µm to 1000 µm, 1 µm to 500 µm, 1 µm to 200 µm, 1 µm to 150 µm 1 µm to 100 µm, or 1 µm to 50 µm. When the second negative active material layer is excessively thin (e.g., outside of the foregoing ranges), the second negative active material may barely function as a lithium reservoir. When the second negative active material layer is excessively thick (e.g., outside of the foregoing ranges), the mass and volume of the all-solid secondary battery 1 may be increased, and the cycle properties may decline. The second negative active material layer may be, for example, a metal foil having a thickness in the foregoing ranges.

In an all-solid secondary battery 1, the second negative active material layer may be, for example, arranged between the negative electrode current collector 21 and the first negative active material layer 22 before the assembly of the all-solid secondary battery 1 or, it may be educed (e.g., produced) by charging, between the negative electrode current collector 21 and the first negative active material layer 22 after the assembly of the all-solid secondary battery. When the second negative active material layer is arranged between the negative electrode current collector 21 and the first negative active material layer 22 before the assembly of the all-solid secondary battery 1, the second negative active material layer, as a metal layer including lithium, may act as a lithium reservoir. For example, lithium foil may be disposed between the negative electrode current collector 21 and the first negative active material layer 22 before the assembly of the all-solid secondary battery 1. As a result, the cycle characteristic of the all-solid secondary battery 1 including the second negative active material layer may be further improved. When the second negative active material layer is educed by charging, after the assembly of an all-solid secondary battery 1, the energy density of the all-solid secondary battery 1 may increase because the second negative active material layer is not included at the time the all-solid secondary battery 1 is assembled. For example, when the all-solid secondary battery 1 is charged, it is charged beyond the charge capacity of the first negative active material layer 22. For example, the first negative active material layer 22 is overcharged. At the beginning of charging, lithium may be occluded in the first negative active material layer 22. The negative active material included in the first negative active material layer 22 may form an alloy or a compound with the lithium-ion that came from the cathode layer 10. When the first negative active material layer 22 is charged beyond its capacity, for example, at the back surface of the first negative active material layer 22, for example, between the negative electrode current collector 21 and the first negative active material layer 22, lithium may be educed, and a metal layer corresponding to the second negative active material layer may be formed by the educed lithium. The second negative active material layer is a metal layer primarily including (e.g., consisting of) lithium (i.e., metal lithium). These results are obtained when, for example, the negative active material included in the first negative active material layer 22 is composed of a substance that forms an alloy or a compound with lithium. When discharged, lithium in the first negative active material layer 22 and the second negative active material layer, which are metal layers, is ionized and moves in the direction of the cathode layer 10. Therefore, it is possible to utilize lithium as a negative active material in the all-solid secondary battery 1. In some embodiments, as the first negative active material layer 22 coats the second negative active material layer, it may function as a protection layer of the second negative active material layer, i.e., the metal layer, and at substantially the same time, it may suppress the eduction growth of a lithium dendrite. Therefore, a short circuit occurrence and capacity deterioration of the all-solid secondary battery may be suppressed or reduced, and as a result, the cycle characteristics of the all-solid secondary battery may be improved. Further, when the second negative active material layer 23 is arranged by charging after the assembly of the all-solid secondary battery, the negative electrode current collector 21, the first negative active material layer 22 and the region between them may be, for example, Li-free areas where lithium (Li) is not included, in the initial state or the state after the discharge.

### Anode Layer: Negative Electrode Current Collector

The negative electrode current collector 21 may be composed of, for example, a material that does not react with lithium, i.e., that does not form alloys and compounds with lithium. The material constituting the negative electrode current collector 21 may be, for example, copper (Cu), stainless steel, titanium (Ti), iron (Fe), cobalt (Co) and nickel (Ni), and/or the like, but is not limited thereto, and any suitable element/material utilized as an electrode current collector in the art may be utilized. These elements/materials should be apparent to one of ordinary skill in the art upon reviewing the present disclosure. The negative electrode current collector 21 may include (e.g., consist of) one of the above-described metals, an alloy of two or more metals or a coating material. The negative electrode current collector 21 may be, for example, a plate-like or foil form.

The all-solid secondary battery 1 may further include a thin film including an element capable of forming an alloy with lithium on, for example, the negative electrode current collector 21. The thin film may be between the negative electrode current collector 21 and the first negative active material layer 22. The thin film may include, for example, an element capable of forming alloys with lithium. Elements capable of forming alloys with lithium may be, for example, gold, silver, zinc, tin, indium, silicon, aluminum, bismuth, and/or the like, but are not limited thereto, and all elements that can form an alloy with lithium may be utilized. The thin film may be composed of one of these metals, or is composed of an alloy of one or more suitable kinds of metals. As the thin film is arranged on the negative electrode current collector 21, for example, the eduction shape of the second negative active material layer may be more flattened, wherein the second negative active material layer may be educed between the thin film 24 and the first negative active material layer 22, and the cycle characteristics of the solid secondary battery 1 can be further improved.

A thickness of the thin film may be, for example, 1 nm to 800 nm, 10 nm to 700 nm, 50 nm to 600 nm, or 100 nm to 500 nm. When a thickness of the thin film is less than 1 nm, the function of the thin film may be difficult to be exhibited. When a thickness of the thin film is too increased (e.g., outside of the foregoing ranges), the thin film itself occludes lithium and the amount of the educed lithium at the anode is decreased, thereby reducing the energy density of the all-solid-state battery, and the cycle characteristics of the all-solid secondary battery 1 may decline. The thin film may be disposed on the negative electrode current collector 21 by, for example, a vacuum deposition method, a sputtering method, a plating method, and/or the like, but the method is not limited thereto, and all methods utilized to form a thin film in the art may be utilized. These methods should be apparent to one of ordinary skill in the art upon reviewing the present disclosure.

### All-Solid Secondary Battery Structure

An all-solid secondary battery structure according to an embodiment includes: at least one all-solid secondary battery according to the present invention; and a conductive flame retardant inactive member on one side or both (e.g., top and bottom) sides of the all-solid secondary battery.

As the flame retardant inactive member is disposed on one or both (e.g., top and bottom) sides of the single all-solid secondary battery, or laminated multiple all-solid second batteries, the possibility of a thermal runaway and ignition of the all-solid secondary battery may be reduced, and as a result, safety of the all-solid secondary battery is further improved. Furthermore, as the flame retardant inactive member absorbs the residual moisture inside the all-solid secondary battery, a degradation of the all-solid secondary battery may be prevented or reduced to improve lifespan properties of the all-solid secondary battery.

The conductive flame retardant inactive member may include, for example, a conductive material. The conductive material may be a fibrous conductive material or a particulate conductive material. The conductive material may be a carbon-based conductive material, a metal-based conductive material, or a metal-carbon composite conductive material. The conductive material may be substantially the same as the conductive material utilized for, for example, the cathode layer. The conductive material may be, for example, graphite, carbon black, acetylene black, ketjen black, carbon fiber, and/or metal powder. The content (e.g., amount) of the conductive material included in the conductive flame retardant inactive member may be, for example, 1 wt% to 30 wt%, 1 wt% to 20 wt%, 1 wt% to 10 wt%, or 1 wt% to 5 wt%, with respect to the total weight of the conductive flame retardant inactive member. As the conductive flame retardant inactive member includes a conductive material, the increase of the internal resistance of the all-solid secondary battery structure including a conductive flame retardant inactive member may be suppressed or reduced, and the cycle properties may be improved. A thickness of the conductive flame retardant inactive member may be, for example, 1 µm to 300 µm, 10 µm to 300 µm, 50 µm to 300 µm, or 100 µm to 200 µm. When the conductive flame retardant member is excessively thin (e.g., outside of the foregoing ranges), it may be difficult to provide a flame retardancy, and when the conductive flame retardant member is excessively thick (e.g., outside of the foregoing ranges), the energy density of the all-solid secondary battery structure may be reduced. The form of the conductive flame retardant inactive member is not limited, and may be selected according to the form of the all-solid secondary battery included in the all-solid secondary battery structure. The conductive flame retardant inactive member may be, for example, in a sheet form, a bar form, or a gasket form.

The conductive flame retardant inactive member may be disposed, for example, on one side or both (e.g., top and bottom) sides of an all-solid secondary battery. The conductive flame retardant inactive member may be disposed, for example, between the laminated plurality of all-solid second batteries. The conductive flame retardant inactive member may be disposed, for example, on the uppermost or the lowermost surface of laminated plurality of all-solid second batteries.

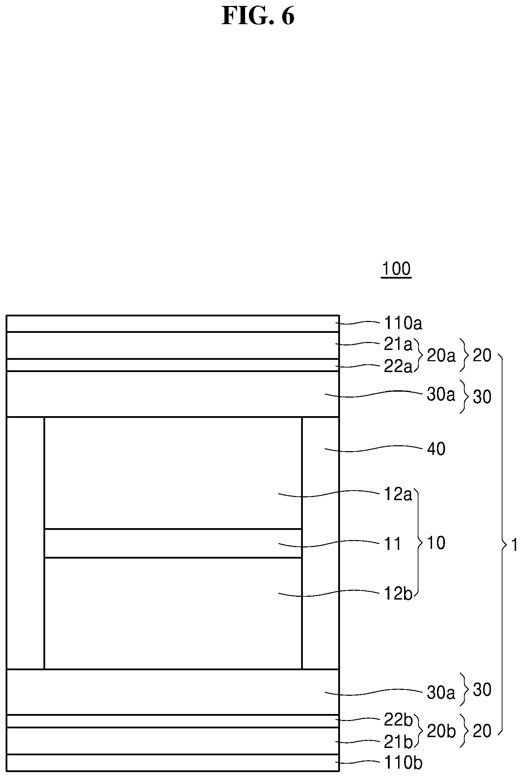

Referring to FIG. 6, the all-solid secondary battery structure 100 includes an all-solid secondary battery 1; and conductive flame retardant inactive members 110a, 110b disposed on both (e.g., top and bottom) sides of the all-solid secondary battery 1. In an embodiment, a conductive flame retardant inactive member 110a or 110b may be included on one side of the all-solid secondary battery 1.

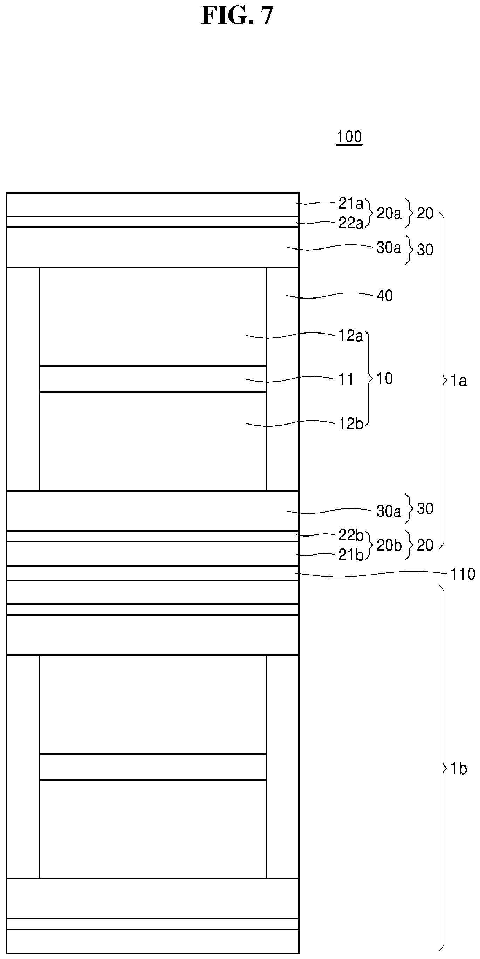

Referring to FIG. 7, the all-solid secondary battery structure 100 includes a plurality of all-solid second batteries 1a and 1b. The conductive flame retardant inactive member 110 is disposed, for example, between the all-solid second batteries 1a and 1b. The conductive flame retardant inactive member 110 may be additionally disposed, for example, on the uppermost or the lowermost surface of the stacked all-solid second batteries 1a and 1b.

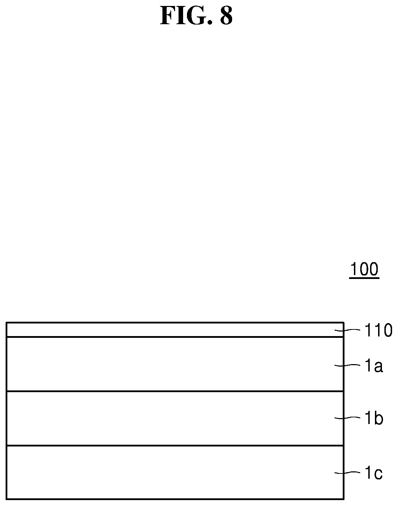

Referring to FIG. 8, the all-solid secondary battery structure 100 includes a plurality of stacked all-solid second batteries 1a, 1b, 1c, and the conductive flame retardant inactive member 110 may be, for example, disposed on the uppermost or the lowermost surface of the stack consisting of a plurality of all-solid second batteries 1a, 1b, and 1c. The conductive flame retardant inactive member 110 may be, for example, selectively disposed between at least two of the all-solid second batteries 1a, 1b, and 1c.

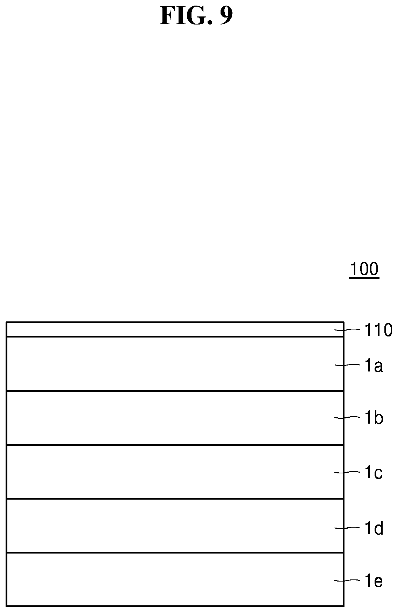

Referring to FIG. 9, the all-solid secondary battery structure 100 includes a plurality of laminated all-solid second batteries 1a, 1b, 1c, 1d, and 1e, and the conductive flame retardant inactive member 110 is, for example, disposed on the uppermost or the lowermost surface of the stack including (e.g., consisting of) a plurality of all-solid second batteries 1a, 1b, 1c, 1d, and 1e. The conductive flame retardant inactive member 110 may be, for example, selectively disposed between at least two of the all-solid second batteries 1a, 1b, 1c, 1d, and 1e.

Through the following examples and comparative examples, the present disclosure is more specifically described. However, these examples are provided to illustrate the present disclosure, and the scope of the present disclosure is not limited thereto.

### Example 1: Flame Retardant Inactive Member (Thickness 120 µm), Al (OH)₃, Plate Press.

### Preparation of Anode Layer

Nickel (Ni) foil having a thickness of 10 µm was prepared as a negative electrode current collector. In some embodiments, carbon black (CB) having a particle diameter of about 30 nm and silver (Ag) particles having an average particle diameter of about 60 nm were prepared as negative active materials.

4 g of a mixture powder wherein carbon black (CB) and silver (Ag) particles are mixed in a weight ratio of 3: 1 was put into a vessel, and 4 g of N-methyl-2-pyrrolidone (NMP) solution including 7 wt% of polyvinylidene fluoride (PVDF) binder (Kureha's # 9300) was added to prepare a mixed solution. Subsequently, NMP was added to the mixed solution in small amounts as the mixed solution was stirred to prepare slurry. The prepared slurry was coated on the steel stainless (SUS) sheet utilizing a bar coater and dried at 80 °C for 10 minutes in the air. The stack obtained accordingly was vacuum dried at 40 °C for 10 hours. The dried stack was cold-roll pressed with a pressure of 5 ton·f/cm² at a speed of 5 m/sec to flatten the surface of the first negative active material layer of the laminate. An anode layer was prepared by the above process. A thickness of the first negative active material layer included by the anode layer was about 7 µm. The area of the first negative active material layer and the negative electrode current collector were substantially the same.

### Preparation of Cathode Layer

Li₂O-ZrO₂ (LZO)-coated LiNi_{0.8}Co_{0.15}Mn_{0.05}O₂ (NCM) was prepared as a positive active material. The LZO-coated positive active material was prepared according to the method disclosed in Korean Published Patent No.10-2016-0064942. As a solid electrolyte, Li₆PS₅Cl, an argyrodite type or kind crystal was prepared (D₅₀ = 0.5 µm, crystalline structure). As a binder, polytetrafluoroethylene (PTFE) binder (DuPont's Teflon binder) was prepared. As a conductive material, carbon nanofibers (CNF) were prepared. A cathode sheet was prepared by, mixing the materials with xylene solvent in a weight ratio of positive active material: solid electrolyte : conductive material: binder = 84 : 11.5 : 3 : 1.5, molding the mixture into a sheet form, and vacuum drying for 8 hours at 40 °C. The cathode sheet was on one side of the positive electrode current collector composed of carbon-coated aluminum foils, and heated-roll pressed with a pressure of 5 ton·f/cm² at a speed of 5 m/sec at 85 °C. A thickness of the cathode layer was about 120 µm. A thickness of the positive active material layer was about 96 µm, and a thickness of the carbon coated aluminum foil was about 24 µm. The area of the positive active material layer and the positive electrode current collector were substantially the same.

### Preparation of Solid Electrolyte Layer

A mixture was prepared by adding 1.5 parts by weight of an acrylic binder to 98.5 parts by weight of Li₆PS₅Cl solid electrolyte (D₅₀ = 3.0 µm, crystalline structure), wherein the solid electrolyte was an argyrodite type or kind crystal. The prepared mixture was stirred while octyl acetate was being added to prepare slurry. The prepared slurry was coated on the 15 µm thick nonwoven fabric placed on a polyethylene terephthalate (PET) substrate utilizing a bar coater and dried at 80 °C for 10 minutes in the air to obtain a stack. The obtained stack was vacuum dried at 80 °C for 2 hours. A solid electrolyte layer was prepared by the above process.

### Flame Retardant Inactive Member

A flame retardant inactive member is prepared by, mixing pulp fibers (cellulose fibers), glass fibers, aluminum hydroxide (Al(OH)₃), an acrylic binder and a solvent to make slurry, molding the slurry into a gasket form, and removing the solvent.

The weight ratio of pulp fiber (cellulose fiber) : glass fiber: aluminum hydroxide (Al(OH)₃) : acrylic binder was 20 : 8: 70 :2. A thickness of the inactive member was 120 µm. The prepared flame retardant member was left for 1 week at room temperature and then was utilized.

### Preparation of All-Solid secondary battery

Referring to FIG. 1, a solid electrolyte layer was disposed so that the first negative active material layer on the anode layer contacts the solid electrolyte layer, and the cathode layer is disposed on the solid electrolyte layer. A laminate was prepared by disposing a gasket that surrounds the cathode layer and contacts the solid electrolyte layer. A thickness of the gasket was about 120 µm. The flame retardant inactive member was utilized as the gasket. The gasket was arranged to contact a side of the cathode layer and the solid electrolyte layer. The cathode layer was arranged at the center of the solid electrolyte layer, and the gasket was arranged to surround the cathode layer and to extend to an end of the solid electrolyte layer. The area of the cathode layer was about 90% of the area of the solid electrolyte layer, and on all of the remaining 10% of the area of the solid electrolyte layer on which the cathode layer is not arranged, the gasket was disposed.

The prepared laminate was plate pressed at 85 °C with a pressure of 500 MPa for 30 minutes. By this pressurization process, the solid electrolyte layer is sintered and the battery characteristics may be improved. A thickness of the sintered solid electrolyte layer was about 45 µm. The density of the Li₆PS₅Cl solid electrolyte, which is an argyrodite type or kind crystal included in the sintered solid electrolyte layer, was 1.6 g/cc. The area of the solid electrolyte layer was substantially the same as the area of the anode layer.

The pressurized laminate was placed in a pouch and vacuum sealed to prepare an all-solid secondary battery. Parts of the positive electrode current collector and the negative electrode current collector were protruded to the outside of the sealed battery and utilized as a cathode layer terminal and an anode layer terminal.

### Example 2: Flame Retardant Inactive Member (Thickness 120 µm), Al(OH)₃, Plate Press.

An all-solid secondary battery was prepared in substantially the same manner as in Example 1, except that the moisture of the flame retardant inactive member was removed by vacuum heat treating at 80 °C for 5 hours before the flame retardant inactive member was disposed on the solid electrolyte layer.

### Example 3: Flame Retardant Inactive Member (Thickness 140 µm), Al(OH)₃, Plate Press.

An all-solid secondary battery was prepared in substantially the same manner as in Example 1, except that a thickness of the flame retardant inactive member was changed to 140 µm, and the moisture of the flame retardant inactive member was removed by vacuum heat treating at 80 °C for 5 hours before the flame retardant inactive member was disposed on the solid electrolyte layer.

### Example 4: Flame Retardant Inactive Member (Thickness 110 µm), Al(OH)₃, Plate Press.

An all-solid secondary battery was prepared in substantially the same manner as in Example 1, except that a thickness of the flame retardant inactive member was changed to 110 µm, and the moisture of the flame retardant inactive member was removed by vacuum heat treating at 80 °C for 5 hours before the flame retardant inactive member was disposed on the solid electrolyte layer.

### Example 5: Flame Retardant Inactive Member (Thickness 70 µm), Al(OH)₃, Plate Press.

An all-solid secondary battery was prepared in substantially the same manner as in Example 1, except that a thickness of the flame retardant inactive member was changed to 70 µm, and the moisture of the flame retardant inactive member was removed by vacuum heat treating at 80 °C for 5 hours before the flame retardant inactive member was disposed on the solid electrolyte layer.

### Example 2: Flame Retardant Inactive Member (Thickness 120 µm), Sn(OH)₄, Plate Press.

An all-solid secondary battery was prepared in substantially the same manner as in Example 1, except that the metal hydroxide included in the flame retardant inactive member was changed from Al(OH)₃ to Sn(OH)₄, and the moisture of the flame retardant inactive member was removed by vacuum heat treating at 80 °C for 5 hours before the flame retardant inactive member was disposed on the solid electrolyte layer.

### Example 7: Flame Retardant Inactive Member (Thickness 120 µm), Fe(OH)₃, Plate Press.

An all-solid secondary battery was prepared in substantially the same manner as in Example 1, except that the metal hydroxide included in the flame retardant inactive member was changed from Al(OH)₃ to Fe(OH)₃, and the moisture of the flame retardant inactive member was removed by vacuum heat treating at 80 °C for 5 hours before the flame retardant inactive member was disposed on the solid electrolyte layer.

### Example 8: Flame Retardant Inactive Member (Thickness 120 µm), Zr(OH)₄, Plate Press.

An all-solid secondary battery was prepared in substantially the same manner as in Example 1, except that the metal hydroxide included in the flame retardant inactive member was changed from Al(OH)₃ to Zr(OH)₄, and the moisture of the flame retardant inactive member was removed by vacuum heat treating at 80 °C for 5 hours before the flame retardant inactive member was disposed on the solid electrolyte layer.

### Comparative Example 1: Free of Flame Retardant Inactive Member, Plate Press.

An all-solid secondary battery was prepared in substantially the same manner as in Example 1, except that a gasket (For example, a flame retardant inactive member) is not utilized in the preparation process of an all-solid secondary battery.

### Comparative Example 8: Inactive Member (Thickness 120 µm), Plate Press.

An all-solid secondary battery was prepared in substantially the same manner as in Example 1, except that an inactive member was utilized in place of a flame retardant inactive member, and the moisture of the inactive member was removed by vacuum heat treating at 80 °C for 5 hours before the inactive member was disposed on the solid electrolyte layer. The inactive member includes pulp fibers and an acrylic binder at a weight ratio of 98: 2, and did not include glass fibers and Al(OH)₃.

### Example 9: Bi-Cell All-Solid secondary battery 1 unit, Conductive Flame Retardant Inactive Member Sheet (Thickness 180 µm) 2 units

### Preparation of Anode Layer

Nickel (Ni) foil having a thickness of 10 µm was prepared as a negative electrode current collector. In some embodiments, carbon black (CB) having a particle diameter of about 30 nm and silver (Ag) particles having an average particle diameter of about 60 nm were prepared as negative active materials.

4 g of a mixture powder wherein carbon black (CB) and silver (Ag) particles are mixed in a weight ratio of 3: 1 was put into a vessel, and 4 g of N-methyl-2-pyrrolidone (NMP) solution including 7 wt% of polyvinylidene fluoride (PVDF) binder (Kureha's # 9300) was added to prepare a mixed solution. Subsequently, NMP was added to the mixed solution in small amounts as the mixed solution was stirred to prepare slurry. The prepared slurry was coated on the steel utilize stainless (SUS) sheet utilizing a bar coater and dried at 80 °C for 10 minutes in the air. The stack obtained accordingly was vacuum dried at 40 °C for 10 hours. The dried stack was roll pressed at room temperature with a pressure of 5 ton·f/cm² at a speed of 5 m/sec to flatten the surface of the first negative active material layer of the stack. An anode layer was prepared by the above process. A thickness of the first negative active material layer included by the anode layer was about 7 µm. The area of the first negative active material layer and the negative electrode current collector were substantially the same. Two anode layers were prepared.

### Cathode Layer Preparation

Li₂O-ZrO₂ (LZO)-coated LiNi_{0.8}Co_{0.15}Mn_{0.05}O₂ (NCM) was prepared as a positive active material. The LZO-coated positive active material was prepared according to the method disclosed in Korean Published Patent No 10-2016-0064942. As a solid electrolyte, Li₆PS₅Cl, an argyrodite type or kind crystal was prepared (D₅₀ = 0.5 µm, crystalline structure). As a binder, polytetrafluoroethylene (PTFE) binder (DuPont's Teflon binder) was prepared. As a conductive material, carbon nanofibers (CNF) were prepared. A cathode sheet was prepared by mixing the materials with xylene solvent in a weight ratio of positive active material: solid electrolyte : conductive material: binder = 84 : 11.5 : 3 : 1.5, molding the mixture into a sheet form, and vacuum drying for 8 hours at 40 °C. The cathode sheet was disposed on both (e.g., top and bottom) sides of the positive electrode current collector composed of carbon-coated aluminum foils, and heated roll pressed with a pressure of 5 ton·f/cm² at a speed of 5 m/sec. The total thickness of the cathode layer was about 220 µm. A thickness of the positive active material layers were each about 96 µm, and a thickness of the carbon coated aluminum foil was about 28 µm. The area of the positive active material layer and the positive electrode current collector were substantially the same.

### Preparation of Solid Electrolyte Layer

A mixture was prepared by adding 1.5 parts by weight of an acrylic binder to 98.5 parts by weight of Li₆PS₅Cl solid electrolyte(D₅₀ = 3.0 µm, crystalline structure), wherein the solid electrolyte was an argyrodite type or kind crystal. The prepared mixture was stirred while octyl acetate was being added to prepare a slurry. The prepared slurry was coated on a nonwoven fabric utilizing a bar coater and dried at 80 °C for 10 minutes in the air to obtain a laminate. The obtained laminate was vacuum dried at 80 °C for 2 hours. A solid electrolyte layer was prepared by substantially the above process. Two solid electrolyte layers were prepared.

### Flame Retardant Inactive Member

A flame retardant inactive member was prepared in substantially the same manner as in Example 1.

### Conductive Flame Retardant Inactive Member

A flame retardant inactive member is prepared by mixing pulp fibers (cellulose fibers), glass fibers, aluminum hydroxide (Al(OH)₃), an acrylic binder and a solvent to make a slurry, molding the slurry into a sheet form, and removing the solvent. The weight ratio of pulp fiber (cellulose fiber) : glass fiber: aluminum hydroxide (Al(OH)₃) : acrylic binder: conductive material was 20 : 8: 50 :2 : 20. A thickness of the conductive inactive member was 180 µm. The prepared conductive flame retardant member was left for 1 week at room temperature and then was utilized.

### Preparation of a Bi-Cell All-Solid secondary battery

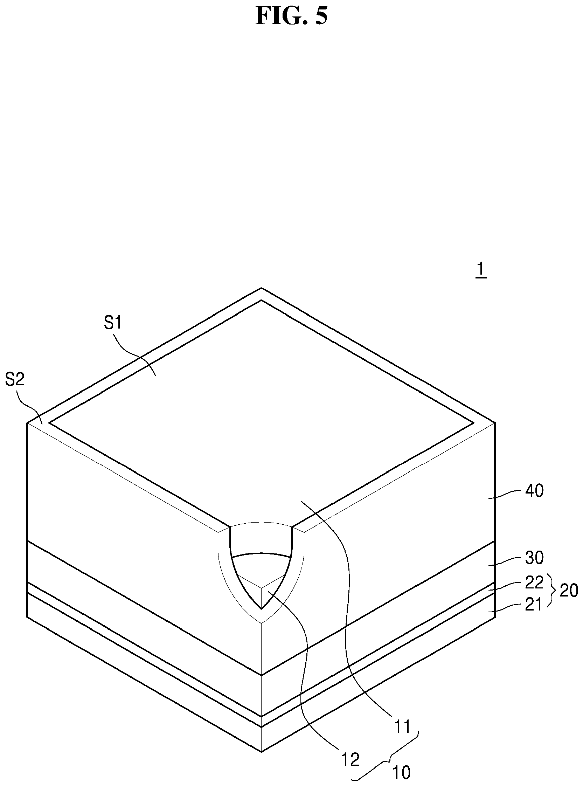

Referring to FIG. 5, a solid electrolyte layer was disposed so that the first negative active material layer on the anode layer contacts the solid electrolyte layer, and the cathode layer is disposed on the solid electrolyte layer. The cathode layer had a structure in which a positive active material layer is disposed on both (e.g., top and bottom) sides of the positive electrode current collector. A gasket was disposed to be around (e.g., to surround) the cathode layer and contact the solid electrolyte layer. A thickness of the gasket was about 220 µm. The flame retardant inactive member was utilized as the gasket. The moisture of the flame retardant inactive member was removed by vacuum heat treating at 80 °C for 5 hours before the flame retardant inactive member was applied to the all-solid secondary battery structure.

The gasket was arranged to contact a side of the cathode layer and the solid electrolyte layer. The cathode layer was arranged at the center of the solid electrolyte layer, and the gasket was arranged to surround the cathode layer and to extend to an end of the solid electrolyte layer. The area of the cathode layer was about 90% of the area of the solid electrolyte layer, and on all of the remaining 10% of the area of the solid electrolyte layer on which the cathode layer is not arranged, the gasket was disposed. A stack is prepared by disposing the solid electrolyte layer on the cathode layer and the gasket and disposing the anode layer on the solid electrolyte layer.

The prepared stack was plate pressed at 85 °C with a pressure of 500 MPa for 30 minutes. By this pressurization process, the solid electrolyte layer is sintered and the battery characteristics may be improved. A thickness of a sintered solid electrolyte layer was about 45 µm. The density of the Li₆PS₅Cl solid electrolyte, which is an argyrodite type or kind crystal included in the sintered solid electrolyte layer, was 1.6 g/cc. The area of the solid electrolyte layer was the same as the area of the anode layer. The pressed stack corresponds to a bi-cell all-solid secondary battery.

### Preparation of All-Solid secondary battery Structure

A structure was prepared by disposing a sheet form conductive flame retardant inactive member having the same area and shape with the stack on one side of the pressed stack or the opposite side.

The moisture of the conductive flame retardant inactive member was removed by vacuum heat treating at 80 °C for 5 hours before the conductive flame retardant inactive member was applied to the all-solid secondary battery structure.

The conductive flame retardant inactive member was substantially the same as the flame retardant inactive member prepared in Example 1, except that it was in a sheet form and further included a conductive material. A thickness of the sheet form conductive flame retardant inactive member was 180 µm.

The prepared structure was placed in a pouch and vacuum sealed to prepare an all-solid secondary battery structure including a bi-cell all-solid secondary battery. Parts of the positive electrode current collector and the negative electrode current collector were protruded to the outside of the sealed battery and utilized as a cathode layer terminal and an anode layer terminal.

### Example 10: Bi-Cell All-Solid secondary battery 1 unit, Conductive Flame Retardant Inactive Member Sheet (Thickness 120 µm) 2 units

An all-solid secondary battery structure was prepared in substantially the same manner as in Example 9, except that a thickness of the sheet form conductive flame retardant inactive member was changed to 120 µm.

### Example 11: Bi-Cell All-Solid secondary battery 1 unit, Conductive Flame Retardant Inactive Member Sheet (Thickness 120 µm) 2 units

An all-solid secondary battery structure was prepared in substantially the same manner as in Example 9, except that a thickness of the sheet form conductive flame retardant inactive member was changed to 100 µm.

### Example 12: Bi-Cell All-Solid secondary battery 1 unit, Conductive Flame Retardant Inactive Member Sheet (Thickness 75 µm) 2 units

An all-solid secondary battery structure was prepared in substantially the same manner as in Example 9, except that a thickness of the sheet form conductive flame retardant inactive member was changed to 75 µm.

### Example 13: Bi-Cell All-Solid secondary battery 3 units, Conductive Flame Retardant Inactive Member Sheet (Thickness 120 µm) 2 units

An all-solid secondary battery structure was prepared in substantially the same manner as in Example 9, except that 3 bi-cell all-solid second batteries were stacked to prepare a stack, and each of the 120 µm thick sheet form conductive flame retardant inactive members were respectively on one side of the stack and the opposite side (e.g., top and bottom sides).

### Example 14: Bi-Cell All-Solid secondary battery 3 units, Conductive Flame Retardant Inactive Member Sheet (Thickness 120 µm) 1 unit

An all-solid secondary battery structure was prepared in substantially the same manner as in Example 9, except that 3 bi-cell all-solid second batteries were stacked to prepare a stack, and a 120 µm thick sheet form conductive flame retardant inactive member was on one side of the stack.

### Example 15: Bi-Cell All-Solid secondary battery 5 units, Conductive Flame Retardant Inactive Member Sheet (Thickness 120 µm) 1 unit

An all-solid secondary battery structure was prepared in substantially the same manner as in Example 9, except that 5 bi-cell all-solid second batteries were stacked to prepare a stack, and a 120 µm thick sheet form conductive flame retardant inactive member was on one side of the stack.

### Comparative Example 3: Bi-Cell All-Solid secondary battery 1 unit, Free of Conductive Flame Retardant Inactive Member Sheet

An all-solid secondary battery structure was prepared in substantially the same manner as in Example 9, except that a bi-cell all-solid secondary battery was itself utilized as an all-solid secondary battery structure without utilizing a sheet form conductive flame retardant inactive member.

### Comparative Example 4: Bi-Cell All-Solid secondary battery 3 units, Free of Conductive Flame Retardant Inactive Member Sheet

An all-solid secondary battery structure was prepared in substantially the same manner as in Example 9, except that 3 bi-cell all-solid second batteries were stacked to prepare a stack and the stack was utilized as an all-solid secondary battery structure without utilizing a sheet form conductive flame retardant inactive member.

### Comparative Example 5: Bi-Cell All-Solid secondary battery 5 units, Free of Conductive Flame Retardant Inactive Member Sheet

An all-solid secondary battery structure was prepared in substantially the same manner as in Example 9, except that 5 bi-cell all-solid second batteries were stacked to prepare a stack and the stack was utilized as an all-solid secondary battery structure without utilizing a sheet form conductive flame retardant inactive member.

### Evaluation Example 1: Charge/Discharge Test

The charge/discharge properties of the all-solid second batteries prepared in Examples 1 to 8 and Comparative Examples 1 to 2 were evaluated by the following charge/discharge test. The charge/discharge test was conducted on all-solid second batteries put inside a thermostatic bath retaining the temperature of 45 °C.

For the first cycle, a battery was charged for 12.5 hours at the constant current of 0.1 C until the voltage of the battery became 3.9 V to 4.25 V. Subsequently, the battery was discharged for 12.5 hours at the constant current of 0.1 C until the voltage of the battery reached 2.5 V.

For the second cycle, the battery was charged for 12.5 hours at the constant current of 0.33 C until the voltage of the battery became 3.9 V to 4.25 V. Subsequently, the battery was discharged for 12.5 hours at the constant current of 0.33 C until the voltage of the battery reached 2.5 V.

For the third cycle, the battery was charged for 12.5 hours at the constant current of 1.0 C until the voltage of the battery became 3.9 V to 4.25 V. Subsequently, the battery was discharged for 12.5 hours at the constant current of 1.0 C until the voltage of the battery reached 2.5 V.

Whether a short circuit occurred in 3 cycles of the charge/discharge process, and discharge capacity at the third cycle are shown in Table 1.

When a short circuit occurred before the first cycle was completed, it was marked with O, when a short circuit occurred in the second cycle, it was marked with △, and when a short circuit didn't occur until the third cycle was completed, it was marked with X.

The discharge capacity is the discharge capacity in the third cycle.

**Table 1**

| | Short Circuit Occurance | Discharge Capacity [mAh/g] |
|---|---|---|
| Example 1 | X | 147.8 |
| Example 2 | X | 175.0 |
| Example 3 | X | 140.0 |
| Example 4 | X | 162.2 |
| Example 5 | X | 120.5 |
| Example 6 | X | 168.0 |
| Example 7 | X | 155.5 |
| Example 8 | X | 160.0 |
| Comparative Example 1 | O | impossible to measure |
| Comparative Example 2 | O | 68.5 |

As shown in Table 1, the all-solid second batteries of Examples 1 to 6 showed improved cycle characteristics and discharge capacities as compared to the all-solid second batteries of Comparative Examples 1 and 2.

In all-solid second batteries of Comparative Examples 1 and 2, which did not include a flame retardant inactive member gasket, a short circuit occurred during a charge/discharge process.

After the first cycle charge is completed in the all-solid second batteries of Examples 1 to 8, scanning electron microscope (SEM) images of the cross sections of the batteries were taken and observed, and it was confirmed that a lithium metal plated layer which corresponds to a second negative active material layer is formed between the first negative active material layer and the negative electrode current collector.

### Evaluation Example 2: Lifespan Characteristics Test

The charge/discharge properties of the all-solid secondary battery structures prepared in Examples 9 to 15 and Comparative Examples 3 to 5 were evaluated by the following charge/discharge test. The charge/discharge test was conducted on all-solid secondary battery structures put inside a thermostatic bath retaining the temperature of 45 °C.

For the first cycle, a battery structure was charged for 12.5 hours at the constant current of 0.6 mA/cm² until the voltage of the battery became 3.9 V to 4.25 V. Subsequently, the battery structure was discharged for 12.5 hours at the constant current of 0.6 mA/cm² until the voltage of the battery reached 2.5 V.

The discharge capacity of the first cycle was set to be the standard capacity. From the second cycle, 150 cycles of charge/discharge processes were carried out under substantially the same conditions as the first cycle.

From the second cycle, the number of cycles when the discharge capacity reaches 95% of the standard capacity are shown in Table 2.

**Table 2**

| | Number of cycles |
|---|---|
| Example 9 | 150 |
| Example 10 | 141 |
| Example 11 | 132 |
| Example 12 | 125 |
| Example 13 | 127 |
| Example 14 | 114 |
| Example 15 | 84 |
| Comparative Example 3 | 98 |
| Comparative Example 4 | 76 |
| Comparative Example 5 | 42 |

As shown in Table 2, the all-solid secondary battery structures including at least one sheet form conductive flame retardant inactive member and a bi-cell all-solid secondary battery showed improved lifespan characteristics compared to the all-solid secondary battery structure of Comparative Example 3 which does not include a sheet form conductive flame retardant inactive member.

Further, the all-solid secondary battery structures of Examples 13 to 15 that include at least one sheet form conductive flame retardant inactive member and a plurality of bi-cell all-solid second batteries showed improved lifespan characteristics compared to the all-solid secondary battery structures of Comparative Examples 4 and 5, which do not include a sheet form conductive flame retardant inactive member.

As described above, the all-solid second batteries according to the examples can be applied to one or more suitable portable devices or vehicles, and/or the like.

According to one or more embodiments, an all-solid secondary battery that may prevent or reduce a short circuit occurrence and has improved cycle characteristics and safety is provided.

The use of "may" when describing embodiments of the present disclosure refers to "one or more embodiments of the present disclosure."

As used herein, the term "substantially," "about," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this disclosure is intended to include all higher numerical limitations subsumed therein. Accordingly, Applicant reserves the right to amend this disclosure, including the claims, to expressly recite any sub-range subsumed within the ranges expressly recited herein.

## Claims

1. An all-solid secondary battery comprising:
a cathode layer (10);
an anode layer (20); and
a solid electrolyte layer (30) between the cathode layer (10) and the anode layer (20), wherein the cathode layer (10) comprises: a positive electrode current collector (11); and a positive active material layer (12, 12a, 12b) on a side or opposite sides of the positive electrode current collector (11),
the anode layer (20) comprises a negative electrode current collector (21) and a first negative active material layer (22) on the negative electrode current collector (21), and
a flame retardant inactive member (40) is on a side of the cathode layer (10),
wherein the flame retardant inactive member (40) contains a matrix and a filler and the matrix contains a fibrous substrate and a fibrous reinforcing agent.

2. The all-solid secondary battery of claim 1, wherein a thickness of the flame retardant inactive member (40) is equal to or less than a thickness of the cathode layer (10).

3. The all-solid secondary battery of claim 2, wherein a thickness of the flame retardant inactive member (40) is 80 % to 100 % of a thickness of the cathode layer (10).

4. The all-solid secondary battery of claim 1, wherein the flame retardant inactive member (40) is around the cathode layer (10), contacts the solid electrolyte layer (30), and is separated from the anode layer (20).

5. The all-solid secondary battery of claim 1, wherein the flame retardant inactive member (40) extends from a side of the cathode layer (10) to a distal end portion of the solid electrolyte layer (30) along a surface of the solid electrolyte layer (30).

6. The all-solid secondary battery of claim 1, wherein the flame retardant inactive member (40) extending from a side of the cathode layer (10) to a distal end portion of the solid electrolyte layer (30) is 1 % to 30 % of the cathode layer (10) in width.

7. The all-solid secondary battery of claim 1, wherein an area of the cathode layer (10) is smaller than an area of the solid electrolyte layer (30) in contact with the cathode layer (10), and
the flame retardant inactive member (40) is around the cathode layer (10) and configured to compensate for a difference in area between the cathode layer (10) and the solid electrolyte layer (30).

8. The all-solid secondary battery of claim 1, wherein
the cathode layer (10) comprises a positive electrode current collector (11); and a first positive active material layer (12a) and a second positive active material layer (12b), respectively on two opposite sides of the positive electrode current collector (11),
the solid electrolyte layer (30) comprises: a first solid electrolyte layer (30a) and a second solid electrolyte layer (30b) that respectively contact the first positive active material layer (12a) and the second positive active material layer (12b),
the anode layer (20) comprises a primary anode layer and a secondary anode layer that respectively contact the first solid electrolyte layer (30a) and the second solid electrolyte layer (30b), and
the flame retardant inactive member (40) is around the cathode layer (10) and between the first solid electrolyte layer (30a) and the second solid electrolyte layer (30b) that face each other.

9. The all-solid secondary battery of any one of the preceding claims wherein the matrix comprises a substrate and a reinforcing agent, wherein
the substrate comprises a first fibrous material, the first fibrous material is an insulating material, the first fibrous material comprises at least one selected from pulp fibers, insulating polymer fibers, and ion-conductive polymer fibers,
the reinforcing agent comprises a second fibrous material, the second fibrous material is a flame retardant material, and the second fibrous material comprises at least one selected from glass fibers and ceramic fibers.

10. The all-solid second battery (1a, 1b, 1c, 1d, 1e) of any one of the claims 1 to 8, wherein the filler is a moisture getter and comprises a metal hydroxide, wherein
the metal hydroxide comprises at least one selected from Mg(OH)₂, Fe(OH)₃, Sb(OH)₃, Sn(OH)₄, TI(OH)₃, Zr(OH)₄, and Al(OH)₃.

11. The all-solid secondary battery of any one of the preceding claims, wherein the solid electrolyte layer (30) comprises a sulfide-based solid electrolyte.

12. The all-solid secondary battery of claim 11, wherein the sulfide-based solid electrolyte is at least one selected from Li₂S-P₂S₅, Li₂S-P₂S₅-LiX, wherein X is a halogen, Li₂S-P₂S₅-Li₂O, Li₂S-P₂S₅-Li₂O-LiO, Li₂S-SiS₂, Li₂S-SiS₂-LiO, Li₂S-SiS₂-LiBr, Li₂S-SiS₂-LiCl, Li₂S-SiS₂-B₂S₃-LiO, Li₂S-SiS₂-P₂S₅-LiO, Li₂S-B₂S₃, Li₂S-P₂S₅-ZₘSₙ, wherein m and n are positive numbers, and Z is one selected from Ge, Zn, and Ga, Li₂S-GeS₂, Li₂S-SiS₂-Li₃PO₄, Li₂S-SiS₂-LiₚMO_{q}, wherein p and q are positive numbers, and M is one selected from P, Si, Ge, B, Al, Ga, and In, Li₇₋ₓPS₆₋ₓClₓ, Li₇₋ₓPS₆₋ₓBrₓ, and Li₇₋ₓPS₆₋ₓIₓ, wherein 0≤x≤2.

13. The all-solid secondary battery of claim 11, wherein the sulfide-based solid electrolyte is an argyrodite-type solid electrolyte comprising at least one selected from Li₆PS₅Cl, Li₆PS₅Br and Li₆PS₅I, and
a density of the argyrodite-type solid electrolyte is 1.5 g/cc to 2.0 g/cc.

14. The all-solid secondary battery of any one of the preceding claims, wherein the first negative active material layer (22) comprises a negative active material and a binder, wherein
the negative active material is in particle form, and an average particle diameter of the negative active material is 4 µm or less.

15. The all-solid secondary battery of claim 14, wherein the negative active material comprises at least one selected from a carbonaceous negative active material and a metal or metalloid negative active material, wherein
the carbonaceous negative active material comprises amorphous carbon.

16. The all-solid secondary battery of claim 15, wherein the metal or metalloid negative active material comprises at least one selected from the group consisting of gold (Au), platinum (Pt), palladium (Pd), silicon (Si), silver (Ag), aluminum (Al), bismuth (Bi), tin (Sn), and zinc (Zn).

17. The all-solid secondary battery of claim 14, wherein the negative active material comprises a mixture of first particles and second particles, wherein the first particles consist of amorphous carbon, and the second particles consist of a metal or metalloid, and
an amount of the second particles is 8 wt% to 60 wt% of a total weight of the mixture.

18. The all-solid secondary battery of any one of the preceding claims, further comprising a second negative active material layer (23) between the negative electrode current collector (21) and the first negative active material layer and/or between the solid electrolyte layer (30) and the first negative active material layer (22), wherein
the second negative active material layer (23) is a metal layer comprising lithium and/or a lithium alloy, and
the second negative active material layer (23) is a plated layer.

19. An all-solid secondary battery structure comprising:
an all-solid secondary battery according to claim 1; and
a conductive flame retardant inactive member (110a, 110b) on a side or opposite sides of the all-solid secondary battery.

## Patentansprüche

1. Massive Sekundärbatterie, umfassend:
eine Kathodenschicht (10);
eine Anodenschicht (20); und
eine Festelektrolytschicht (30) zwischen der Kathodenschicht (10) und der Anodenschicht (20), wobei die Kathodenschicht (10) einen positiven Elektrodenstromabnehmer (11); und eine positive Aktivmaterialschicht (12, 12a, 12b) auf einer Seite oder gegenüberliegenden Seiten des positiven Elektrodenstromabnehmers (11) umfasst,
die Anodenschicht (20) umfasst: einen negativen Elektrodenstromabnehmer (21) und eine erste negative Aktivmaterialschicht (22) auf dem negativen Elektrodenstromabnehmer (21), und
ein flammhemmendes inaktives Element (40) auf einer Seite der Kathodenschicht (10) angeordnet ist, wobei das flammhemmende inaktive Element (40) eine Matrix und einen Füllstoff umfasst und die Matrix ein faseriges Substrat und ein faseriges Verstärkungsmittel umfasst.

2. Massive Sekundärbatterie nach Anspruch 1, wobei eine Dicke des flammhemmenden inaktiven Elements (40) gleich oder geringer als eine Dicke der Kathodenschicht (10) ist.

3. Massive Sekundärbatterie nach Anspruch 2, wobei eine Dicke des flammhemmenden inaktiven Elements (40) 80 % bis 100 % einer Dicke der Kathodenschicht (10) beträgt.

4. Massive Sekundärbatterie nach Anspruch 1, wobei das flammhemmende inaktive Element (40) um die Kathodenschicht (10) herum angeordnet ist, mit der Festelektrolytschicht (30) in Kontakt steht und von der Anodenschicht (20) getrennt ist.

5. Massive Sekundärbatterie nach Anspruch 1, wobei sich das flammhemmende inaktive Element (40) entlang einer Oberfläche der Festelektrolytschicht (30) von einer Seite der Kathodenschicht (10) zu einem distalen Endabschnitt der Festelektrolytschicht (30) erstreckt.

6. Massive Sekundärbatterie nach Anspruch 1, wobei das flammhemmende inaktive Element (40), das sich von einer Seite der Kathodenschicht (10) zu einem distalen Endabschnitt der Festelektrolytschicht (30) erstreckt, 1 % bis 30 % der Kathodenschicht (10) breit ist.

7. Massive Sekundärbatterie nach Anspruch 1, wobei eine Fläche der Kathodenschicht (10) kleiner ist als eine Fläche der Festelektrolytschicht (30), die mit der Kathodenschicht (10) in Kontakt steht, und
das flammhemmende inaktive Element (40) um die Kathodenschicht (10) herum angeordnet und dazu konfiguriert ist, einen Flächenunterschied zwischen der Kathodenschicht (10) und der Festelektrolytschicht (30) auszugleichen.

8. Massive Sekundärbatterie nach Anspruch 1, wobei
die Kathodenschicht (10) umfasst: einen positiven Elektrodenstromabnehmer (11); und eine erste positive Aktivmaterialschicht (12a) und eine zweite positive Aktivmaterialschicht (12b), jeweils auf zwei gegenüberliegenden Seiten des positiven Elektrodenstromabnehmers (11),
die Festelektrolytschicht (30) umfasst: eine erste Festelektrolytschicht (30a) und eine zweite Festelektrolytschicht (30b), die jeweils mit der ersten positiven Aktivmaterialschicht (12a) und der zweiten positiven Aktivmaterialschicht (12b) in Kontakt stehen,
die Anodenschicht (20) umfasst: eine primäre Anodenschicht und eine sekundäre Anodenschicht, die jeweils mit der ersten Festelektrolytschicht (30a) und der zweiten Festelektrolytschicht (30b) in Kontakt stehen, und
das flammhemmende inaktive Element (40) um die Kathodenschicht (10) herum und zwischen der ersten Festelektrolytschicht (30a) und der zweiten Festelektrolytschicht (30b), die einander gegenüberliegen, angeordnet ist.

9. Massive Sekundärbatterie nach einem der vorangehenden Ansprüche, wobei die Matrix ein Substrat und ein Verstärkungsmittel umfasst, wobei
das Substrat ein erstes faseriges Material umfasst, das erste faserige Material ein isolierendes Material ist und das erste faserige Material mindestens eines aus Zellstofffasern, isolierenden Polymerfasern und ionenleitenden Polymerfasern umfasst,
das Verstärkungsmittel ein zweites faseriges Material umfasst, das zweite faserige Material ein flammhemmendes Material ist und das zweite faserige Material mindestens eines aus Glasfasern und Keramikfasern umfasst.

10. Massive Sekundärbatterie (1a, 1b, 1c, 1d, 1e) nach einem der Ansprüche 1 bis 8, wobei der Füllstoff ein Feuchtigkeitsabsorber ist und ein Metallhydroxid umfasst, wobei
Das Metallhydroxid mindestens eines aus Mg(OH)₂, Fe(OH)₃, Sb(OH)₃, Sn(OH)₄, TI(OH)₃, Zr(OH)₄ und Al(OH)₃ umfasst.

11. Massive Sekundärbatterie nach einem der vorangehenden Ansprüche, wobei die Festelektrolytschicht (30) einen Festelektrolyten auf Sulfidbasis umfasst.

12. Massive Sekundärbatterie nach Anspruch 11, wobei der Festelektrolyt auf Sulfidbasis mindestens eines aus Li₂S-P₂S₅, Li₂S-P₂S₅-LiX, mit X als ein Halogen, Li₂S-P₂S₅-Li₂O, Li₂S-P₂S₅-Li₂O-LiI, Li₂S-SiS₂, Li₂S-SiS₂-LiO, Li₂S-SiS₂-LiBr, Li₂S-SiS₂-LiCl, Li₂S-SiS₂-B₂S₃-LiO, Li₂S-SiS₂-P₂S₅-LiI, Li₂S-B₂S₃, Li₂S-P₂S₅-ZₘSₙ, mit m und n als positiven Zahlen und Z als eines aus Ge, Zn und Ga, Li₂S-GeS₂, Li₂S-SiS₂-Li₃PO₄, Li₂S-SiS₂-LiₚMO_{q}, mit p und q als positiven Zahlen und M als eines aus P, Si, Ge, B, Al, Ga und In, Li₇₋ₓPS₆₋ₓClₓ, Li₇₋ₓPS₆₋ₓBrₓ und Li₇₋ₓPS₆₋ₓIₓ, mit 0≤x≤2, ist.

13. Massive Sekundärbatterie nach Anspruch 11, wobei der Festelektrolyt auf Sulfidbasis ein Festelektrolyt vom Argyrodit-Typ ist, der mindestens eines aus Li₆PS₅Cl, Li₆PS₅Br und Li₆PS₅I umfasst, und
eine Dichte des Festelektrolyten vom Argyrodit-Typ 1,5 g/cm³ bis 2,0 g/cm³ beträgt.

14. Massive Sekundärbatterie nach einem der vorangehenden Ansprüche, wobei die erste negative Aktivmaterialschicht (22) ein negatives Aktivmaterial und ein Bindemittel umfasst, wobei
das negative Aktivmaterial in Form von Partikeln vorliegt und ein durchschnittlicher Partikeldurchmesser des negativen Aktivmaterials 4 µm oder weniger beträgt.

15. Massive Sekundärbatterie nach Anspruch 14, wobei das negative Aktivmaterial mindestens eines aus einem kohlenstoffhaltigen negativen Aktivmaterial und einem metallischen oder metalloiden negativen Aktivmaterial umfasst, wobei
das kohlenstoffhaltige negative Aktivmaterial amorphen Kohlenstoff umfasst.

16. Massive Sekundärbatterie nach Anspruch 15, wobei das metallische oder metalloide negative Aktivmaterial mindestens eines aus Gold (Au), Platin (Pt), Palladium (Pd), Silizium (Si), Silber (Ag), Aluminium (Al), Wismut (Bi), Zinn (Sn) und Zink (Zn) umfasst.

17. Massive Sekundärbatterie nach Anspruch 14, wobei das negative Aktivmaterial ein Gemisch aus ersten Partikeln und zweiten Partikeln umfasst, wobei die ersten Partikel aus amorphem Kohlenstoff bestehen und die zweiten Partikel aus einem Metall oder Metalloid bestehen und
eine Menge der zweiten Partikel 8 Gew.-% bis 60 Gew.-% des Gesamtgewichts des Gemischs beträgt.

18. Massive Sekundärbatterie nach einem der vorangehenden Ansprüche, ferner umfassend eine zweite negative Aktivmaterialschicht (23) zwischen dem negativen Elektrodenstromabnehmer (21) und der ersten negativen Aktivmaterialschicht und/oder zwischen der Festelektrolytschicht (30) und der ersten negativen Aktivmaterialschicht (22), wobei
die zweite negative Aktivmaterialschicht (23) eine Metallschicht ist, die Lithium und/oder eine Lithiumlegierung umfasst, und
die zweite negative Aktivmaterialschicht (23) eine plattierte Schicht ist.

19. Massive Sekundärbatteriestruktur, umfassend:
eine massive Sekundärbatterie nach Anspruch 1; und
ein leitfähiges flammhemmendes inaktives Element (110a, 110b) auf einer Seite oder auf gegenüberliegenden Seiten der massiven Sekundärbatterie.

## Revendications

1. Batterie secondaire entièrement solide comprenant :
une couche de cathode (10) ;
une couche d'anode (20) ; et
une couche d'électrolyte solide (30) entre la couche de cathode (10) et la couche d'anode (20), dans laquelle la couche de cathode (10) comprend : un collecteur de courant d'électrode positive (11) et une couche de matériau actif positif (12, 12a, 12b) sur un côté ou des côtés opposés du collecteur de courant d'électrode positive (11),
la couche d'anode (20) comprend un collecteur de courant d'électrode négative (21) et une première couche de matériau actif négatif (22) sur le collecteur de courant d'électrode négative (21), et
un élément inactif ignifuge (40) se trouve sur un côté de la couche de cathode (10), dans laquelle l'élément inactif ignifuge (40) contient une matrice et une charge et la matrice contient un substrat fibreux et un agent de renforcement fibreux.

2. Batterie secondaire entièrement solide selon la revendication 1, dans laquelle une épaisseur de l'élément inactif ignifuge (40) est égale ou inférieure à une épaisseur de la couche de cathode (10).

3. Batterie secondaire entièrement solide selon la revendication 2, dans laquelle une épaisseur de l'élément inactif ignifuge (40) représente de 80 % à 100 % d'une épaisseur de la couche de cathode (10).

4. Batterie secondaire entièrement solide selon la revendication 1, dans laquelle l'élément inactif ignifuge (40) se trouve autour de la couche de cathode (10), entre en contact avec la couche d'électrolyte solide (30) et est séparé de la couche d'anode (20).

5. Batterie secondaire entièrement solide selon la revendication 1, dans laquelle l'élément inactif ignifuge (40) s'étend depuis un côté de la couche de cathode (10) vers une partie d'extrémité distale de la couche d'électrolyte solide (30) le long d'une surface de la couche d'électrolyte solide (30).

6. Batterie secondaire entièrement solide selon la revendication 1, dans laquelle l'élément inactif ignifuge (40) s'étendant depuis un côté de la couche de cathode (10) vers une partie d'extrémité distale de la couche d'électrolyte solide (30) représente de 1 % à 30 % de la couche de cathode (10) en largeur.

7. Batterie secondaire entièrement solide selon la revendication 1, dans laquelle une surface de la couche de cathode (10) est plus petite qu'une surface de la couche d'électrolyte solide (30) en contact avec la couche de cathode (10), et
l'élément inactif ignifuge (40) se trouve autour de la couche de cathode (10) et est configuré pour compenser une différence de surface entre la couche de cathode (10) et la couche d'électrolyte solide (30).

8. Batterie secondaire entièrement solide selon la revendication 1, dans laquelle
la couche de cathode (10) comprend un collecteur de courant d'électrode positive (11) ; et une première couche de matériau actif positif (12a) et une seconde couche de matériau actif positif (12b), respectivement sur deux côtés opposés du collecteur de courant d'électrode positive (11),
la couche d'électrolyte solide (30) comprend : une première couche d'électrolyte solide (30a) et une seconde couche d'électrolyte solide (30b) qui entrent respectivement en contact avec la première couche de matériau actif positif (12a) et la seconde couche de matériau actif positif (12b),
la couche d'anode (20) comprend une couche d'anode primaire et une couche d'anode secondaire qui entrent respectivement en contact avec la première couche d'électrolyte solide (30a) et la seconde couche d'électrolyte solide (30b), et
l'élément inactif ignifuge (40) se trouve autour de la couche de cathode (10) et entre la première couche d'électrolyte solide (30a) et la seconde couche d'électrolyte solide (30b) qui se font face.

9. Batterie secondaire entièrement solide selon l'une quelconque des revendications précédentes, dans laquelle la matrice comprend un substrat et un agent de renforcement, dans laquelle
le substrat comprend un premier matériau fibreux, le premier matériau fibreux est un matériau isolant, le premier matériau fibreux comprend au moins l'une choisie parmi des fibres de pâte, des fibres polymères isolantes et des fibres polymères conductrices d'ions,
l'agent de renforcement comprend un second matériau fibreux, le second matériau fibreux est un matériau ignifuge et le second matériau fibreux comprend au moins l'une choisie parmi des fibres de verre et des fibres céramiques.

10. Batterie secondaire entièrement solide (1a, 1b, 1c, 1d, 1e) selon l'une quelconque des revendications 1 à 8, dans laquelle la charge est un absorbeur d'humidité et comprend un hydroxyde de métal, dans laquelle
l'hydroxyde de métal comprend au moins l'un choisi parmi Mg(OH)₂, Fe(OH)₃, Sb(OH)₃, Sn(OH)₄, TI(OH)₃, Zr(OH)₄ et Al(OH)₃.

11. Batterie secondaire entièrement solide selon l'une quelconque des revendications précédentes,
dans laquelle la couche d'électrolyte solide (30) comprend un électrolyte solide à base de sulfure.

12. Batterie secondaire entièrement solide selon la revendication 11, dans laquelle l'électrolyte solide à base de sulfure est au moins l'un choisi parmi Li₂S-P₂S₅, Li₂S-P₂S₅-LiX, X étant un halogène, Li₂S-P₂S₅-Li₂O, Li₂S-P₂S₅-Li₂O-LiI, Li₂S-SiS₂, Li₂S-SiS₂-LiO, Li₂S-SiS₂-LiBr, Li₂S-SiS₂-LiCl, Li₂S-SiS₂-B₂S₃-LiO, Li₂S-SiS₂-P₂S₅-LiI, Li₂S-B₂S₃, Li₂S-P₂S₅-ZₘSₙ, m et n étant des nombres positifs, et Z étant l'un choisi parmi Ge, Zn et Ga, Li₂S-GeS₂, Li₂S-SiS₂-Li₃PO₄, Li₂S-SiS₂-LiₚMO_{q}, où p et q sont des nombres positifs, et M est l'un choisi parmi P, Si, Ge, B, Al, Ga et In, Li_{7-X}PS₆₋ₓClₓ, Li_{7-X}PS₆₋ₓBrₓ et Li₇₋ₓPS₆₋ₓIₓ, dans laquelle 0≤x≤2.

13. Batterie secondaire entièrement solide selon la revendication 11, dans laquelle l'électrolyte solide à base de sulfure est un électrolyte solide de type argyrodite comprenant au moins l'un choisi parmi Li₆PS₅Cl, Li₆PS₅Br et Li₆PS₅I, et
une densité de l'électrolyte solide de type argyrodite est de 1,5 g/cc à 2,0 g/cc.

14. Batterie secondaire entièrement solide selon l'une quelconque des revendications précédentes,
dans laquelle la première couche de matériau actif négatif (22) comprend un matériau actif négatif et un liant, dans laquelle
le matériau actif négatif se présente sous forme de particule et un diamètre moyen de particule du matériau actif négatif est de 4 µm ou moins.

15. Batterie secondaire entièrement solide selon la revendication 14, dans laquelle le matériau actif négatif comprend au moins l'un choisi parmi un matériau actif négatif carboné et un matériau actif négatif métallique ou métalloïde, dans laquelle
le matériau actif négatif carboné comprend du carbone amorphe.

16. Batterie secondaire entièrement solide selon la revendication 15, dans laquelle le matériau actif négatif métallique ou métalloïde comprend au moins l'un choisi dans le groupe constitué par l'or (Au), le platine (Pt), le palladium (Pd), le silicium (Si), l'argent (Ag), l'aluminium (AI), le bismuth (Bi), l'étain (Sn) et le zinc (Zn).

17. Batterie secondaire entièrement solide selon la revendication 14, dans laquelle le matériau actif négatif comprend un mélange de premières particules et de secondes particules, dans laquelle les premières particules sont constituées de carbone amorphe, et les secondes particules sont constituées d'un métal ou d'un métalloïde, et
une quantité des secondes particules est de 8 % en poids à 60 % en poids d'un poids total du mélange.

18. Batterie secondaire entièrement solide selon l'une quelconque des revendications précédentes, comprenant en outre une seconde couche de matériau actif négatif (23) entre le collecteur de courant d'électrode négative (21) et la première couche de matériau actif négatif et/ou entre la couche d'électrolyte solide (30) et la première couche de matériau actif négatif (22), dans laquelle
la seconde couche de matériau actif négatif (23) est une couche métallique comprenant du lithium et/ou un alliage de lithium, et
la seconde couche de matériau actif négatif (23) est une couche plaquée.

19. Structure de batterie secondaire entièrement solide comprenant :
une batterie secondaire entièrement solide selon la revendication 1 ; et
un élément inactif ignifuge conducteur (110a, 110b) sur un côté ou des côtés opposés de la batterie secondaire entièrement solide.
